(19) Europäisches Patentamt
European Patent Office
Office européen des brevets

(11) EP 4 163 339 A1

(12) EUROPEAN PATENT APPLICATION
published in accordance with Art. 153(4) EPC

(43) Date of publication:
12.04.2023 Bulletin 2023/15

(21) Application number: 21817915.8

(22) Date of filing: 19.03.2021

(51) International Patent Classification (IPC):
*C09D 5/00* (2006.01) *A61L 31/08* (2006.01)
*A61L 31/12* (2006.01) *A61L 31/14* (2006.01)
*A61L 31/16* (2006.01) *C09D 7/61* (2018.01)
*C09D 7/63* (2018.01) *B32B 3/26* (2006.01)
*C09D 1/00* (2006.01) *A01N 25/34* (2006.01)

(52) Cooperative Patent Classification (CPC):
A01N 25/34; A61L 31/08; A61L 31/12; A61L 31/14; A61L 31/16; B32B 3/26; C09D 1/00; C09D 5/00; C09D 7/61; C09D 7/63

(86) International application number:
PCT/JP2021/011458

(87) International publication number:
WO 2021/246026 (09.12.2021 Gazette 2021/49)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 05.06.2020 JP 2020098916

(71) Applicants:
- **Energyfront Inc.**
  **Okayama-shi, Okayama 701-0212 (JP)**
  Designated Contracting States:
  **EE**
- **School Corporation Shujitsugakuen**
  **Okayama-shi, Okayama 703-8516 (JP)**
  Designated Contracting States:
  **EE**
- **National Institute Of Advanced Industrial Science and Technology**
  **Chiyoda-ku**
  **Tokyo 100-8921 (JP)**

(72) Inventors:
- **UEDA Takeji**
  **Okayama-shi, Okayama 701-0212 (JP)**
- **YAMADA Yoichi**
  **Okayama-shi, Okayama 703-8516 (JP)**
- **AKEDO Jun**
  **Tsukuba-shi, Ibaraki 305-8560 (JP)**

(74) Representative: **Kehl, Ascherl, Liebhoff & Ettmayr Patentanwälte Partnerschaft mbB**
**Emil-Riedel-Straße 18**
**80538 München (DE)**

# (54) COATING FILM AND ARTICLE WITH COATING FILM FORMED ON SURFACE

(57) A coating film has a surfactant having a hydrophobic group or a lipophilic group and a hydrophilic group, and a film having holes on a surface thereof capable of carrying the surfactant. The surfactant has the lipophilic group of 5 or more carbon atoms and does not evaporate at room temperature. The film is a porous film. A porosity of the porous film is 5% or more and 60% or less. The surfactant is an abietic acid-based compound. Alternatively, the surfactant is chlorhexidine. A hole diameter of the holes is greater than 10 times as large as a size of a virus.

EP 4 163 339 A1

FIG.1A

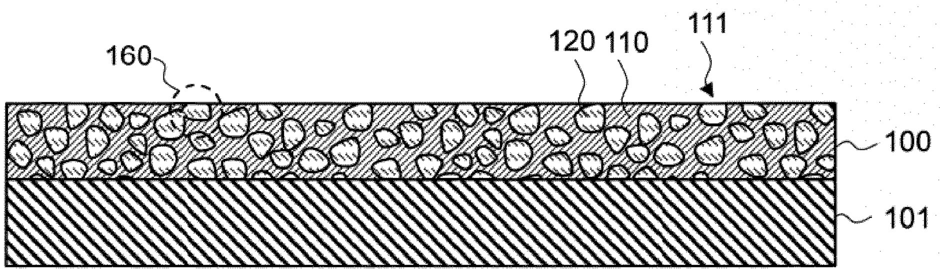


FIG.1B

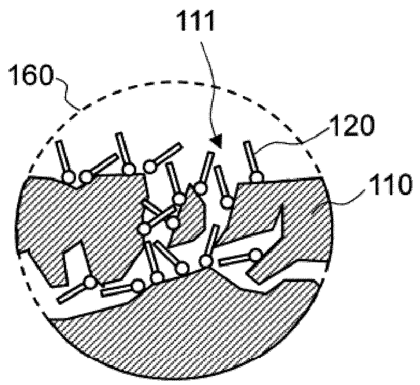


FIG.1C

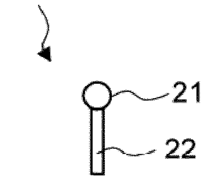

## Description

### TECHNICAL FIELD

The present invention relates to a coating film having an antiviral function applicable to tools and clothing used in medical and nursing care sites or in daily life, a building material, a method for producing the coating film, and an article with the coating film formed on surface.

### BACKGROUND ART

Recently, starting with SARS corona viruses in 2003 and highly-pathogenic avian influenza viruses, MARS corona viruses in 2012, Ebola Viruses in 2014, and new corona viruses in 2020 are spreading and threatening human life.

With such a background, the hygiene consciousness of consumers is further increased, and there is a strong desire to remove viruses from everything used in the living environment. Therefore, there is a need for a method for stably and persistence coating a surface with an antiviral active agent for a variety of objects, such as door knobs, hand straps in trains, clothing and footwear, and interior of buildings that are touched by a person's hand.

Patent Literature 1 discloses a technique of fixing a surfactant to a material such as a cloth having hydroxyl groups by chemical bonding. Cited Document 2 discloses a method for adhering a particulate antiviral active substance generating hydroxyl radicals to a sheet-like substance by a binder such as polyvinyl alcohol. Surfactants have been used here, but only as an adjuvant to facilitate an uptake of moisture from virus-containing droplets into a sheet. Cited Document 3 discloses a method in which a sulfonic acid-based surfactant is carried on an inorganic filler and fixed with a coating resin. Thus, in order to remove various viruses from a surface of objects touched by a person's hand, various methods using the surfactant have been studied.

### CITATION LIST

### PATENT LITERATURE

Patent Literature 1: Japanese Laid-Open Patent Publication No. 2011-98976
Patent Literature 2: Japanese Laid-Open Patent Publication No. 2012-72100
Patent Literature 3: Japanese Laid-Open Patent Publication No. 2017-210566

### SUMMARY OF INVENTION

### TECHNICAL PROBLEM

However, it is difficult to fix the surfactant to a desired solid surface in a form capable of sufficiently exhibiting the antiviral function, in particular, to various materials such as metal, resin, and ceramic, or to easily and stably fix the surfactant to a surface of a three-dimensional structure such as a flexible material such as a cloth or a door knob.

In a method disclosed in Patent Literature 1, an application range is limited because it is limited to a material having an OH group, and an adhesion amount thereof is also limited, so that the antiviral function is easily lost due to abrasion. In Patent Literature 2, a surfactant is embedded in a resin and cannot exhibit its antiviral performance. Further, in Patent Literature 3, in the case where an antiviral active substance is mixed with resin or the like and coated, the antiviral active substance is embedded in the resin or the like, and the antiviral active substance does not exude to the surface, so that the antiviral effect cannot be sufficiently exhibited.

In view of the above problems, in an embodiment of the present invention, one object is to provide a coating film having a function such as an antiviral activity that can be formed on various materials, a method for forming the coating film, or an article having the coating film formed on a surface thereof.

### SOLUTION TO PROBLEM

A coating film according to an embodiment of the present invention includes a surfactant having a hydrophobic group or a lipophilic group and a hydrophilic group, and a film having holes on a surface thereof capable of carrying the surfactant.

In the above configuration, the surfactant has the lipophilic group of 5 or more carbon atoms and does not evaporate at room temperature.

In the above configuration, a porosity of a porous film is 5% or more and 60% or less.
In the above configuration, the surfactant is an abietic acid-based compound.
In the above configuration, the surfactant is chlorhexidine.
In the above configuration, a hole diameter of the holes is greater than 10 times as large as a virus size.
In the above configuration, the hole diameter of the holes is smaller than a virus size.
In the above configuration, the hole diameter of the holes is 1 nm or less.
In the above configuration, the lipophilic group of the surfactant is absorbed in the holes on the surface of the film and the hydrophilic group is exposed.
In the above configuration, the hydrophilic group of the surfactant is absorbed in the holes on the surface of the film and the lipophilic group is exposed.
An article according to an embodiment of the present invention is one in which a coating film according to an embodiment of the present invention is formed on a surface.
An article according to an embodiment of the present invention is one in which a coating film according to an embodiment of the present invention is disposed on a surface, and the coating film has a transparency of 10% or less in a HAZE value.

## ADVANTAGEOUS EFFECTS OF INVENTION

According to an embodiment of the present invention, a coating film having a function such as an antiviral activity that can be formed on various materials, a method for forming the coating film, or an article having the coating film formed on a surface thereof can be provided.

## BRIEF DESCRIPTION OF DRAWINGS

FIG. 1A is a cross-sectional view of a coating film according to an embodiment of the present invention.
FIG. 1B is an enlarged view of a partial area of the coating film.
FIG. 1C is a diagram illustrating a surfactant.
FIG. 2A is a cross-sectional view of a coating film according to an embodiment of the present invention.
FIG. 2B is an enlarged view of a partial area of the coating film.
FIG. 3 is a diagram explaining a mechanism for destroying an enveloped virus on a surface of a coating film according to an embodiment of the present invention.
FIG. 4A is a diagram explaining a mechanism for destroying an enveloped virus on a surface of a coating film according to an embodiment of the present invention.
FIG. 4B is a diagram explaining a mechanism for destroying an enveloped virus on a surface of a coating film according to an embodiment of the present invention.
FIG. 5A is a diagram explaining a mechanism for destroying a virus by a surfactant carried in a hole of a coating film.
FIG. 5B is a diagram explaining a mechanism for destroying a virus by a surfactant carried in a hole of a coating film.
FIG. 6A is a diagram explaining a mechanism for destroying a virus by a surfactant carried in a hole of a coating film.
FIG. 6B is a diagram explaining a mechanism for destroying a virus by a surfactant carried in a hole of a coating film.
FIG. 7A is a schematic view explaining a change with time of a coating film having a high film hardness.
FIG. 7B is a schematic view explaining a change with time of a coating film having a high film hardness.
FIG. 7C is a schematic view explaining a change with time of a coating film having a high film hardness.
FIG. 8A is a schematic view explaining a change with time of a coating film having a low film hardness.
FIG. 8B is a schematic view explaining a change with time of a coating film having a low film hardness.
FIG. 8C is a schematic view explaining a change with time of a coating film having a low film hardness.
FIG. 9A is a chemical formula of sodium linear alkylbenzene sulfonate.
FIG. 9B is a schematic diagram of a chemical formula of sodium linear alkylbenzene sulfonate.
FIG. 9C is a diagram explaining a mechanism for destroying an envelope by sodium linear alkylbenzene sulfonate.
FIG. 10A is a chemical formula of dehydroabietic acid.
FIG. 10B is a diagram explaining a mechanism for destroying an envelope by dehydroabietic acid.
FIG. 11A is a formula of chlorhexidine.
FIG. 11B is a schematic diagram of a chemical formula of chlorhexidine.
FIG. 12A is a diagram explaining a mechanism for destroying an envelope by chlorhexidine.
FIG. 12B is a diagram explaining a mechanism for destroying a membrane protein by chlorhexidine.
FIG.13 is a diagram explaining a mechanism for destroying a non-enveloped virus on a surface of a coating film according to an embodiment of the present invention.

FIG. 14A is a diagram explaining a method for producing a coating film according to an embodiment of the present invention.

Fig. 14B is a diagram explaining a method for producing a coating film according to an embodiment of the present invention.

FIG. 14C is a diagram explaining a method for producing a coating film according to an embodiment of the present invention.

FIG. 15A is a diagram illustrating an appearance of porous particles.

FIG. 15B is a diagram illustrating a cross section of porous particles.

FIG. 15C is a diagram explaining a method for producing a coating film according to an embodiment of the present invention.

FIG. 15D is a diagram explaining a method for producing a coating film according to an embodiment of the present invention.

FIG. 16A is a cross-sectional view of a coating film according to an embodiment of the present invention.

FIG. 16B is a cross-sectional view of a coating film according to an embodiment of the present invention.

FIG. 17A is a diagram explaining an outline of testing according to ISO 21702 standards.

FIG. 17B is a diagram explaining an outline of testing according to ISO 21702 standards.

FIG. 17C is a diagram explaining an outline of testing according to ISO 21702 standards.

FIG. 17D is a diagram explaining an outline of testing according to ISO 21702 standards.

FIG.18 is a graph illustrating relationships between time (min) and remaining viruses (PFU/mL).

FIG.19 is a result of measuring Raman peak intensity by Raman scattering spectroscopy after ultrasonic cleaning in comparative example 1.

FIG. 20 is a result of measuring the Raman peak intensity by Raman scattering spectroscopy after ultrasonic cleaning in example 1.

FIG. 21 is a result of measuring the Raman peak intensity by Raman scattering spectroscopy after a ball-on-disk test in example 1.

## DESCRIPTION OF EMBODIMENTS

Hereinafter, an embodiment of the present invention will be described in detail with reference to drawings. The present invention is not limited to the following embodiments, and can be variously modified within a scope of the gist thereof.

(First Embodiment)

In the present embodiment, a coating film 100 having an antiviral function and a method for producing the coating film 100 according to an embodiment of the present invention will be described with reference to FIG. 1 to FIG. 16. In the present embodiment, antiviral means an inactivation of a pathogen virus.

<Outline>

It is important to grasp an infection route in order to prevent a spread of infection of the pathogen virus. For example, the infection routes of coronaviruses are said to be a contact infection and a droplet infection. The contact infection includes an infection by direct contact with an infected person by saliva or body fluids, and indirect contact through objects. Wiping with alcohol can be a countermeasure against the droplet infection via solid surfaces. However, there are many places where it is difficult to sufficiently deal with viruses such as seats and hand straps of a train, and a handrail of an escalator.

Therefore, there is a need for a method for stably and persistence coating a surface with an antiviral active substance in a long-term durable form for a variety of objects, such as door knobs, hand straps of a train, clothing and footwear, and an interior of a building such as a floor material of a toilet that are touched by a person's hands.

There are several techniques for a surface treatment with the antiviral function. (1) Adhering metal particles, metal oxides, or metal hydroxides that are believed to be effective in viral inactivation, such as Ag, Cu, (2) fixing molecules having specific functional groups that bind with viral proteins and inhibit activity, (3) utilizing the oxidative decomposition ability of photocatalysts, and the like. However, methods (1) to (3) respectively have problems in cost, durability, and sustainability.

Ethanol-washing and hand-washing with soap are known to be effective methods for inactivating enveloped viruses including new coronavirus (SARS-CoV-2), and it is known that they are effective against non-enveloped viruses in the case where surfactants are appropriately selected. However, techniques applied to coating for fixing the surfactants on a variety of materials for antiviral purposes are limited.

Conventionally, a surfactant having high solubility in water is generally used as a solution for a detergent or disinfectant. There are solid soaps and the like as solid state surfactants, but there are problems with slipping and strength when they come in contact with water. On door knobs or straps which are touched by a person's hand, friction at the time of gripping, touching, or the like becomes a problem. In addition, it is difficult to frequently wipe with a surfactant in public places such as a door knob, a handrail, and a hand strap that are waved by a person's hand. For these, the effect of the antivirus is expressed in a short time, and persistence is required. While surfactants in water can resolve the envelope by forming micelles, in the case where the surfactant molecules are completely fixed, surfactants cannot form perfect micelles and functionality is limited. The lipid membrane on the surface of the virus is negatively charged and the protein has a positively charged portion, and the surfactant in an aqueous solution inactivates the virus by acting its charge and lipophilic group with appropriate directionality. Therefore, even in a state in which the coating film is applied to a substrate, it is desired that the surfactant is sustained-released and functions in a state in which the surfactant has a degree of freedom during virus adhesion. Hereinafter, the coating film 100 and a method for producing the coating film 100 according to an embodiment of the present invention will be described in detail.

<Composition of Coating Film>

FIG. 1A is a diagram showing the coating film 100 having an antiviral function according to an embodiment of the present invention. As shown in Fig. 1A, the coating film 100 is provided on a substrate 101. The coating film 100 includes a surfactant 120 having a hydrophobic group or a lipophilic group and a hydrophilic group, and a film 110 having holes 111 on a surface thereof capable of carrying the surfactant 120.

The coating film 100 according to an embodiment of the present invention may be provided on the surface of the various substrates 101. The substrate 101 may be a hard solid, such as metal, wood, stainless steel, glass, or plastic, or may be a deformable solid, such as a cloth, rubber sheet, sponge, aluminum foil, or a thin film.

In the coating film 100 according to an embodiment of the present invention, the surfactant 120 has a function for destroying the enveloped virus and the non-enveloped virus. Therefore, in the case where a virus or a droplet liquid containing a virus adheres to the surface of the coating film 100, the virus can be destroyed and inactivated. That is, the coating film 100 can have an antiviral function. Hereinafter, the composition of the coating film 100 will be described in detail.

The coating film 100 has a film 110 having holes 111 capable of carrying the surfactant 120 at least on a surface thereof. It is preferable that a material of the film 110 has the holes 111 capable of carrying the surfactant 120 on a surface thereof. Ceramics, metals, and organic resins are used as the material of the film 110. Ceramics include zeolites, titanium dioxide, zinc oxide, aluminum oxide, and the like. For example, zinc oxide absorbs ultraviolet light. Therefore, even in the case where the coating film 100 is used outdoors, deterioration of the surfactant 120 can be suppressed due to absorption of ultraviolet rays by the zinc oxide. In addition, titanium dioxide can decompose stains on the surface of the film 110 due to a photocatalyst and hydrophilicity at a time of light irradiation. Metals include antimicrobial metals such as silver, copper, and the like. Examples of the organic resin include a thermosetting resin, a photocurable resin, and the like. In addition to the above-described materials, metal salts, metal hydroxides, or metal particles having antiviral properties may be used as the film 110.

The film 110 may be a porous film. The surface of the porous film has holes 111 capable of carrying the surfactant 120. Here, the surfactant 120 is physically adsorbed to the holes 111. The surfactant 120 is not chemically bonded to the porous film. The porous film is formed by depositing porous particles. As the porous particles, various substances such as activated carbon, zeolite, mesoporous silica, mesoporous alumina, porous glass, porous metal, porous metal complex, allophane, and the like are used alone or in combination.

The porous film may be a through-hole type porous film or an independent-hole type porous film. Here, the through-hole type porous film is a film including a hole (through hole) through which the holes 111 penetrate in the thickness direction, and the independent-hole type porous film is a film including a hole (independent hole) in which holes 111A are surrounded by a curved surface which is almost spherical. Note that the holes 111A are not a completely closed space, and fine holes may be provided in a part thereof. Note that, in this specification and the like, the fine holes refer to a hole having a small hole diameter of about several 100 pm to several nm. Note that, even in the case of the porous film of the independent-hole type, it may have the holes 111 that are not closed on the surface of the film 110, as long as the surfactant 120 is carried on the holes 111. In the case of the porous ceramic film of the independent-hole type, the surfactant 120 can be sustained-released in the case where the surface is shaved while maintaining strength. The porous film is formed as a composite of ceramics and microcapsules containing a surfactant.

In FIG. 1A, a through-hole type porous film is shown as the film 110. FIG. 1B shows an enlarged view of a partial area 160 of the film 110. The film 110 is provided with holes 111 penetrating in the thickness direction of the film. A surfactant 120 is carried inside the holes 111.

FIG. 2A is a diagram showing the coating film 100A having the antiviral function according to an embodiment of the present invention. In FIG. 2A, a porous film of an independent-hole type is shown as a film 110A. FIG. 2B shows

an enlarged view of a partial area 160A of a film 110A. The film 110A is provided with the holes 111A surrounded by a curved surface which is almost spherical. A surfactant 120A is carried inside the holes 111A.

The hole diameter of the holes 111 provided on the surface of the film 110 is preferably a size that is easy to carry the surfactant 120. The hole diameter of the holes 111 is preferably a size that it is difficult for the virus or the destroyed virus to remain in the holes 111. Further, it is more preferable that the hole diameter of the holes 111 is a size that is easy to carry the surfactant 120, and a size that is difficult for the virus or a destroyed virus to remain in the holes 111. In order to carry the surfactant 120, for example, the hole diameter of the holes 111 is preferably several 100 pm or more and 50 μm or less. In the present specification and the like, the hole diameter refers to the diameter of the hole in the case where the hole is assumed to be a sphere. The hole diameter refers to a major diameter of an ellipsoid in the case where the holes are an ellipsoid. In addition, the hole diameter refers to an outer diameter of the hole in the case where the hole is not spherical, assuming that the hole is spherical. In the case where the film 110 is a porous film, the hole diameter of the holes 111 may not be uniform, as long as the hole diameter of the holes 111 provided on the film 110 is a few 100 pm or more and 50 μm or less. A porosity of the holes 111 formed in the porous film is preferably, for example, 5% or more and 60% or less.

In the case where the porous film is used as the film 110, the surfactant 120 can be carried in the holes 111 of the porous film. In this case, the amount of the surfactant 120 contained in the film 110 can be increased in accordance with the film thickness and the porosity of the film 110. The greater the film thickness of the film 110, the more the amount of the surfactant 120 that can be carried inside the film 110 can be increased. In addition, the greater the porosity of the holes 111 formed in the film 110, the more the amount of the surfactant 120 that can be carried in the film 110 can be increased. On the other hand, if the porosity is too large, the mechanical strength such as abrasion resistance and adhesion strength of the film decreases, and therefore, it is not possible to maintain practical effectiveness of the antiviral coating for a long period of time. As a result of examining the optimum porosity as the antiviral coating from the viewpoint of sustained release of such a drug and durability of the film, it was found that the porosity of the film is preferably in the range of 5% to 60%.

In addition to the hole diameter, the factors related to the carrying amount and sustained release are also influenced by wettability and the isoelectric point of a porous film surface. The wettability also has lipophilicity and hydrophilicity, and depending on the degree of wettability, an adsorption direction of the surfactant changes to either lipophilic or hydrophilic. In addition, the surface of the porous film is acid-based, and hydrogen ions and the like are released in response to an increase in pH of the aqueous solution to be contacted, and the charge condition of the surface generally changes from positive to negative. pH at which this charged state averages to zero is called the isoelectric point, which is unique for each porous material. If the sign of the charging of the porous surface and the sign of the charging of the surfactant are opposite, permeability to the holes can be increased by an electrostatic attraction force, and a sustained release rate tends to be slow. On the other hand, in the case where the sign of the charging of the porous surface and the surfactant are the same, it is difficult to be carried to the fine hole due to an electrostatic repulsion, and the sustained release rate tends to be high. Therefore, it is desirable to use a material system in which the isoelectric point is selected from the viewpoint of an appropriate carrying amount and the sustained release rate. For example, it is known that an isoelectric point of alumina is around 9, and an isoelectric point of silica is around 2.5, and in the case of a composite material, an isoelectric point is determined around neutral. According to studies by the inventors, since the droplet liquid containing the virus is in the vicinity of neutrality, a porous material having an isoelectric point equal to or more than 7, which becomes positively charged in the neutral solution if the surfactant is negatively charged, is more preferable, and a porous material having an isoelectric point equal to or less than 7, which becomes negatively charged in the neutral solution if the surfactant is positively charged, is more preferable. However, in the case of a surfactant having a low degree of dissociation or a neutral surfactant or a surfactant having a large-hydrophobic group, the fine hole size and the lipophilicity of the surface of the porous material are more predominant control factors for carrying and the sustained release than charging.

In addition, the film 110 is not limited to the porous film as long as it can have the holes 111 capable of carrying the surfactant 120 on a surface thereof. For example, the holes 111 may be formed on the surface of the film 110. For example, the surface of the film 110 may be formed with the holes 111 processed by etching. Alternatively, the film 110 itself may be formed by nanoimprinting. Here, the nanoimprint is a technique of transferring a fine concavo-convex pattern to the resin by performing heating or photo-curing by pressing the resin against the substrate 101 coated with the resin using a mold having a fine concavo-convex structure. By nanoimprinting, a film having holes 111 capable of carrying the surfactant 120 on a surface thereof may be formed. Here, the holes 111 capable of carrying the surfactant 120 on the surface is an opening or a concavo-convex pattern exposed on the surface. In the case where the film 110 having the holes 111 is formed by nanoimprinting, the above-described organic resin is preferably used. As described above, in the case where the film 110 is processed by etching or nanoimprinting, the hole diameter of the holes 111 may be substantially uniform in a range of 50 nm or more and 50 μm or less. The film thickness of the film 110 may be appropriately set according to the material of the substrate 101 and the purpose of providing the coating film 100.

The surfactant 120 is carried in the holes 111 of the film 110. In the present specification and the like, the

surfactant 120 is a substance having a portion which is easily compatible with water (hydrophilic group) and a portion which is easily compatible with oil (lipophilic group or hydrophobic group) in molecules. As shown in FIG. 1C, the surfactant 120 has a hydrophilic group 21 and a lipophilic group 22 (or the hydrophobic group). In this case, it may be difficult to destroy the virus on the surface of the coating film 100. Therefore, on the surface of the coating film 100, it is preferable that at least one of the hydrophilic group and the lipophilic group of the surfactant 120 is exposed on the surface of the coating film 100. Only the hydrophilic group of the surfactant 120 may be exposed on the surface of the coating film 100, or only the lipophilic group of the surfactant 120 may be exposed. Alternatively, both the hydrophilic group and the lipophilic group of the surfactant 120 may be exposed. In the case where the hydrophilic group of the surfactant 120 is exposed on the surface of the coating film 100, the viruses are destroyed by the hydrophilic group of the surfactant 120 being electrostatically attracted to the hydrophilic group of the virus, or by the surfactant 120 by the interaction at the time of contact. In addition, in the case where the lipophilic group of the surfactant 120 is exposed on the surface of the coating film 100, the surfactant 120 causes an interaction when the lipophilic group of the surfactant 120 comes into contact with the lipophilic group of the virus, and consequently destroys the virus. Additionally, a critical micelle content of the surfactant 120 is preferably low, for example, a material having 0.6 g/L or less is preferable. As the surfactant 120, a material having a water-solubility of, for example, 750 g/L or less, more preferably, a material having a water-solubility of 150 g/L or less is preferable.

The lipophilic group of the surfactant 120 is preferably an organic compound of 5 or more carbon atoms and does not substantially evaporate at room temperature. Here, the room temperature refers to a temperature range of 1°C to 30°C. Alternatively, the lipophilic group of the surfactant 120 is preferably an organic compound of 5 or more carbon atoms and does not substantially evaporate at least under an operating environment. In the present specification and the like, the term "does not substantially evaporate" means that a vapor pressure of the organic compounds in the operating environment is negligibly small. Here, the operating environment refers to a temperature range of -10°C to 50°C.

The hydrophilic group of the surfactant 120 includes, for example, carbonyl groups, azo groups, amino groups, imino groups, imine groups, nitro groups, nitroso groups, halogen groups, thio groups, oxy groups, oxo groups, phosphino groups, quaternary ammonium groups, carboxy groups, sulfo groups, hydroxy groups, aldehyde groups, amino groups, cyano groups, amide groups, ester bonds, ether bonds, and the like.

As the surfactant 120, a plant-derived surfactant such as terpenoid, stilbene, or polyphenol is used.

A terpene-based compound is composed of two or more isoprene units ($C_5$), and examples thereof respectively include a monoterpene-based compound ($C_{10}$), a sesquiterpene-based compound ($C_{15}$), a diterpene-based compound ($C_{20}$), a sesterterpene-based compound ($C_{25}$), a triterpene-based compound ($C_{30}$), and a tetraterpene-based compound ($C_{40}$), depending on the number of isoprene units.

Stilbenes include skeletal C6-C2-C6.

Polyphenols include tannins, alkaloids, polyketides, flavonoids, and phenylpropanoids.

As the surfactant 120, for example, sodium linear alkylbenzene sulfonate (sodium dodecylbenzene sulfonate), benzalkonium chloride, dehydroabietic acid, chlorhexidine, or the like are preferably used.

Sodium linear alkylbenzene sulfonate is exemplified below. Sodium linear alkylbenzene sulfonate, in particular, sodium dodecylbenzene sulfonate (molecular formula: $C_{18}H_{29}NaO_3S$) has a molecular weight of 348.48, a solubility of 10 g/100mL to 30 g/100mL at 20°C, and a length of 2 nm to 3 nm. Linear sodium alkylbenzene sulfonates have high solubility and are negatively charged in water.

[Chemical Formula 1]

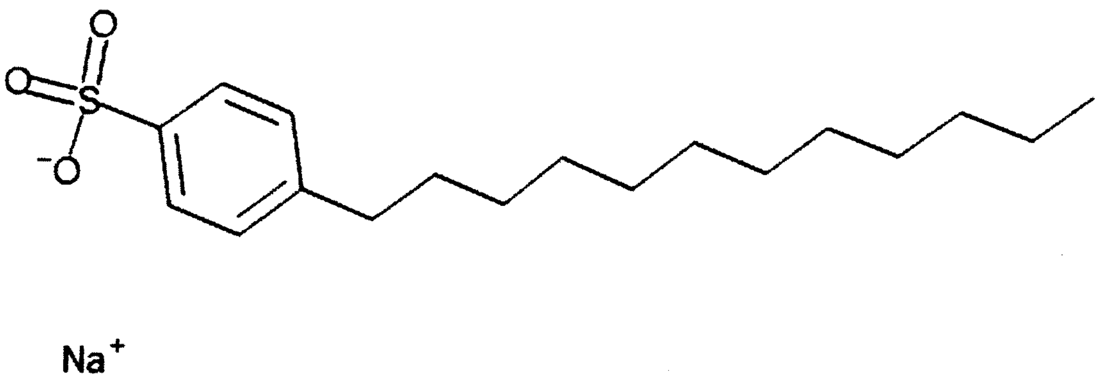

Benzalkonium chloride is exemplified below. Benzalkonium chloride (molecular formula in the case of R = $C_{13}H_{27}$: $C_{22}H_{40}ClN$) has a molecular weight of 354.02, a solubility of 10 g/100mL or more at 20°C, and a length of about

2.5 nm to 3.5 nm. Benzalkonium chloride has high solubility and is positively charged.

[Chemical Formula 2]

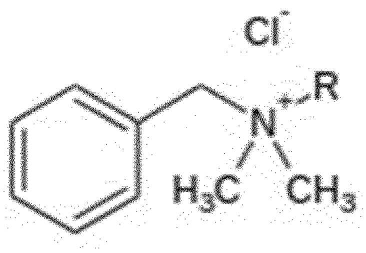

$R = -C_8H_{17} \cdots -C_{18}H_{37}$

Dehydroabietic acid is exemplified below. Dehydroabietic acid (molecular formula: $C_{20}H_{28}O_2$) has a molecular weight of 300.44, a solubility of 0.4 mg/100mL to 0.7 mg/100mL, a length of 1.5 nm to 2.5 nm, and a width of 0.5 nm to 1 nm. Dehydroabietic acid has low solubility and is negatively charged.

[Chemical Formula 3]

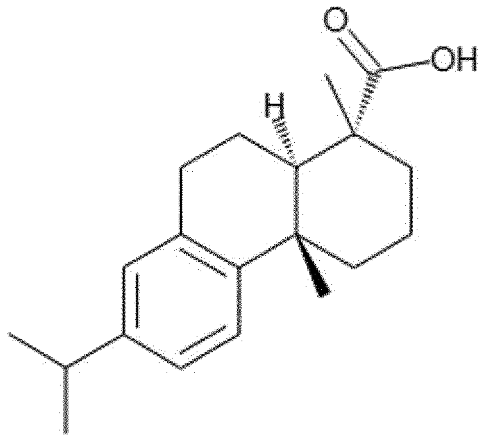

In the case where, for example, abietic acid is used as the surfactant 120, by carrying a high estimate, for example, 10 mg/cm$^2$ of an abietic acid compound in the film 110, the coating film 100 can exert an antiviral effect.

Chlorhexidine is exemplified below. Chlorhexidine ($C_{22}H_{30}Cl_2N_{10}$) has a molecular weight of 505.4, a solubility of about 80 mg/100mL, and a length of 2.5 nm to 3.5 nm. Chlorhexidine has low solubility and is positively charged.

[Chemical Formula 4]

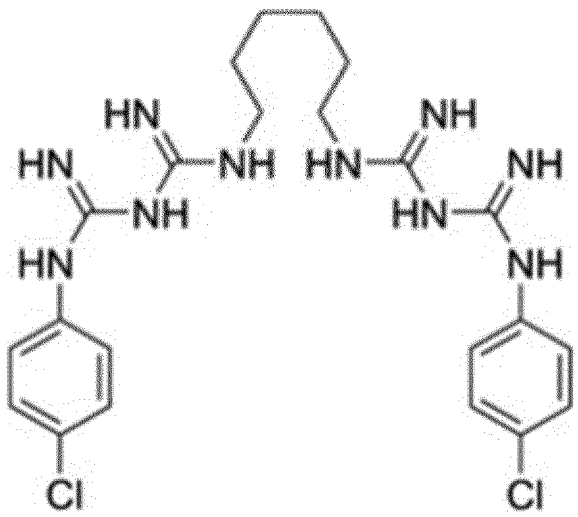

The aqueous solubility of chlorhexidine at 20°C is 80 mg/100mL, as described above. In general, chlorhexidine is often used as a chlorhexidine gluconate. The solubility of chlorhexidine gluconate in water at 20°C is equal to or more than 2100 mg/100mL and greater than the solubility of chlorhexidine in water at 20°C. Therefore, in the case where the coating film 100 according to an embodiment of the present invention is used as a surfactant, chlorhexidine having a lower solubility than chlorhexidine gluconate is preferably used. Therefore, even if the surface of the coating film 100 is cleaned, it is possible to prevent the chlorhexidine from eluting. As a result, the viral inactivation effect of the coating film 100 can be sustained for a long period of time. Chlorhexidine is also a substance used in oral care. Therefore, even if chlorhexidine is dissolved in water, safety to the human body can be ensured.

The coating film 100 according to an embodiment of the present invention exerts the antiviral effect on the enveloped virus and the non-enveloped virus. Enveloped viruses include, for example, SARS coronavirus, highly pathogenic avian influenza virus, MARS coronavirus, Ebola virus, new coronavirus, smallpox virus, hepatitis B virus, measles virus, rabies virus, and the like. The non-enveloped viruses include noroviruses, rotaviruses, polioviruses, adenoviruses and the like.

<Mechanism for Destroying Viruses 1>

Next, a mechanism of destroying an envelope-type virus on the surface of the coating film 100 will be explained. FIG. 3 to FIG. 4B are drawings explaining a mechanism for destroying enveloped viruses on a coated film according to an embodiment of the present invention. FIG. 3 to FIG. 4B show an example of the enveloped viruses.

Coronaviruses are exemplified as enveloped viruses 200 shown in FIG. 3 to FIG. 4B. A virus 200 has a positive-stranded single-stranded RNA 201 as the viral genome. The virus 200 is covered with three main elements: an envelope 202 (lipid bilayer), spikes 203, and matrices 204. RNA 201 is surrounded by the envelope 202, the spikes 203, and the matrices 204.

FIG. 3 shows a state in which a droplet liquid 210 containing the virus 200 is flying toward the coating film 100. The droplet liquid 210 containing the virus 200 is scattered by sneezing or coughing by an infected person. The droplet liquid 210 contains moisture. Thereafter, the droplet 210 adheres to the coating film 100.

FIG. 4A shows the state of the droplet liquid 210 containing the viruses 200 being adhered to the coating film 100. In the case where the droplet liquid 210 containing the virus 200 adheres to the surface of the coating film 100, the surfactant 120 carried in the holes 111 on the surface of the coating film 100 which has the hydrophilic group is dissolved in the droplet liquid 210 due to the moisture contained in the droplet liquid 210. The surfactant 120 moves through the droplet 210 to reach the virus 200.

FIG. 4B shows the virus 200 being destroyed by surfactant 120. Since the envelope 202 is lipophilic, the lipophilic group 22 of the surfactant 120 is inserted into the envelope 202 of the virus 200. The destabilization of the envelope 202, which is the effect of the surfactant 120, destroys the envelope 202. The destruction of the envelope 202 causes the virus 200 to lose infectivity.

Next, a relationship between the hole diameter of the holes 111 of the film 110 and the size of the virus will be explained referring to FIG. 5A to FIG. 6B. FIG. 5A to FIG. 6B are drawings explaining a mechanism by which viruses are destroyed by the surfactant 120 carried in the holes 111 of the coating film 100. FIG. 5A to FIG. 6B are enlarged views of one of the holes 111 formed in the coating film 100.

In the coating film 100 according to an embodiment of the present invention, the hole diameter of the holes

111 of the film 110 is preferably smaller than the size of the virus. For example, a diameter of the coronavirus is 50 nm to 200 nm and a diameter of the influenza virus is 80 nm to 120 nm. Therefore, in FIG. 5A to FIG. 6B, the hole diameter of the holes 111 is assumed to be about 50 nm, and a diameter of the viruses 200 is assumed to be about 100 nm.

The holes 111 are formed in the film 110. The surface of the film 110 may be hydrophilic or lipophilic. Whether the surface of the film 110 is hydrophilic or lipophilic can be controlled by the material of the film 110. Here, a mechanism by which the virus 200 is destroyed in the case where the surface of the film 110 is hydrophilic will be described.

The surfactant 120 is carried in the holes 111 formed in the film 110 (see FIG. 5A). In the case where the surface of the film 110 is hydrophilic, the hydrophilic group of the surfactant 120 comes into contact with the surface of the film 110, and the lipophilic groups are exposed. In this condition, in the case where the virus 200 approaches the holes 111, the lipophilic group of the surfactant 120 approaches a surface of the virus 200 (see FIG. 5B). Since the hole diameter of the holes 111 is smaller than the diameter of the virus 200, the surfactant 120 contacts a portion of the virus 200 (see FIG. 6A). The lipophilic group of the surfactant 120 then destroys a portion of the enveloped 202 of the contacted viruses 200 (see FIG. 6B).

In this way, in the case where the hole diameter of the holes 111 is smaller than the diameter of the virus 200, the surfactant 120 carried in the holes 111 comes into contact with a part of the virus 200. Since the surfactant 120 can partially concentrate to destroy the envelope 202, the amount of surfactant required to destroy the virus 200 can be reduced. In addition, since the amount of the surfactant 120 used to destroy the virus 200 can be reduced, the antiviral function of the coating film 100 can be sustained for a long period of time.

Viruses destroyed by surfactants may also remain on the surface of the coating film. If the hole diameter of the holes is greater than the size of the virus, the destroyed virus may adhere in the holes. In this case, the destroyed virus may block the surfactant remaining in the holes, and thus the surfactant may not be able to elute on the surface of the coating film. This may significantly reduce the effect of destroying the virus on the surface of the coating film.

In the coating film 100 according to an embodiment of the present invention, the hole diameter of the holes 111 of the film 110 is smaller than the size of the virus. Here, since the diameter of the coronavirus is generally 50 nm to 200 nm, the hole diameter of the holes 111 of the film 110 is preferably less than 50 nm. Further, since the diameter of the influenza virus is 80 nm to 120 nm, the hole diameter of the holes 111 of the film 110 is preferably, for example, less than 80 nm. Thus, even if the destroyed virus remains in the holes 111, the hole diameter of the holes 111 is sufficiently smaller than the virus size, so that it is possible to prevent the destroyed virus from being adhered in the holes 111. Therefore, by wiping the surface of the coating film 100 with water or alcohol, the destroyed virus can be easily removed. Therefore, since the surfactant 120 can be exposed on the surface of the coating film 100, the antiviral function can be sustained for a long period of time.

In the coating film 100 according to an embodiment of the present invention, the hole diameter of the holes 111 of the film 110 may be larger than about 10 times the size of the virus. Since the diameter of the coronavirus is substantially 50 nm to 200 nm, the hole diameter of the holes 111 of the film 110 is, for example, 20 μm or more. Further, since the diameter of the influenza virus is 80 nm to 120 nm, the hole diameter of the holes 111 of the film 110 is, for example, 12 μm or more. Thus, even if the destroyed virus remains in the holes 111, the hole diameter of the holes 111 is sufficiently larger than the virus size, so that it is possible to prevent the destroyed virus from being adhered to the holes 111. Therefore, by wiping the surface of the coating film 100 with water or alcohol, the destroyed virus can be easily removed. Accordingly, the surfactant 120 can be exposed on the surface of the coating film 100, so that the antiviral function can be sustained for a long period of time.

The persistence of the surfactant 120 of the coating film 100 in the case where the film 110 is hard will be explained referring to FIG. 7A to FIG. 7C. FIG. 7A to FIG. 7C are schematic views explaining changes over time in a high-hardness coating film. The diagrams illustrate an initial state of the coating film 100 using a film 110 formed of high-hardness materials. As the high-hardness materials, for example, ceramics such as alumina, silica, and zeolite can be used. These materials may be used alone or in combination. The ceramics can form the film 110 having a high hardness by increasing a denseness of the film in accordance with conditions of film formation. FIG. 7B is a diagram showing a state after a certain period of time has elapsed using the coating film 100. FIG. 7C is a diagram showing a state after a certain period of time has elapsed using the coating film 100. To remove the viruses and the destroyed viruses, the surface of the coating film 100 is wiped off. Since the hardness of the material used as the film 110 is high, the surface of the coating film 100 is not scraped. Therefore, the persistence of the coating film 100 can be increased. Therefore, the durability of the antiviral function of the coating film 100 can be prolonged. In addition, a texture such as a grip texture of the coating film 100 can be maintained.

Next, the persistence of the surfactant 120 of the coating film 100 in the case where the hardness of the film 110 is low will be explained referring to FIG. 8A to FIG. 8C. FIG. 8A to FIG. 8C are schematic views for explaining changes over time in a low-hardness coating film. FIG. 8A is a diagram explaining an initial-state of the coating film 100 using the film 110 formed of low-hardness materials. As the low-hardness materials, for example, ceramics such as alumina, silica, and zeolite, or metals having antimicrobial properties such as copper and silver can be used. The ceramics can form the low-hardness coating film by reducing the denseness of the film in accordance with the conditions of the

film formation. FIG. 8B is a diagram showing a state after a certain period of time has elapsed using the coating film 100. FIG. 8C is a diagram showing a state after a certain period of time has elapsed using the coating film 100. To remove the viruses and the destroyed viruses, the surface of the coating film 100 is wiped off. Since the hardness of the material used as the film 110 is low, the surface of the coating film 100 is gradually scraped. Accordingly, the surfactant 120 is also easily exposed on the surface of the film 110. Therefore, the persistence of the antiviral function of the coating film 100 can be prolonged.

Further, mesoporous silica or machinable ceramics can be used as such a low-hardness ceramic material. In this case, even in the case of the porous film of the independent-hole type described in FIG. 2, the material used as the film 110 is gradually scraped, so that the surfactant carried in the independent-hole always appears on the surface of the film 110, and the antiviral effect can be exhibited. In addition, in the case where an AD method is used, since this type of porous film can be formed with a high adhesion force at a thickness equal to or more than 10 $\mu$m, antiviral properties can be exhibited over a long period of time.

In addition, the carrying property of the surfactant 120 in the holes 111 will be described based on the relationship between the hole diameter of the holes 111 and the size of the surfactant 120. Since the size of the surfactant 120 is about several nm, if the hole diameter of the holes 111 is equal to or more than 10 nm, it can be easily carried inside the holes 111.

Here, a case where the surfactant 120 is carried in the holes of the porous film using zeolite as the material of the film 110 will be described. Zeolite is a type of ceramics and is a generic term for crystalline aluminosilicates. The constituent elements are Al, Si, O, and cations (positive ions), and are based on a tetrahedral structure of $SiO_4$ and $AlO_4$. By complex and regular connection of elements, fine holes of approximately the same size as small molecules of several 100 pm to several nm in diameter are regularly formed in one, two, or three dimensions.

The surface of zeolite is generally negatively charged. In addition, since zeolite is hydrophilic, a cationic surfactant 120 is easily adsorbed. Additionally, other ceramics are also generally positively charged and are often lipophilic. In this case, the lipophilic groups of the surfactant are easily adsorbed. The combination of these ceramics enables control such as exposing the hydrophilic group on the surface of the film 110 or exposing the hydrophobic group. In addition, since the fine holes of zeolite are 1 nm, although only metal ions and considerably smaller surfactants can be carried, surfactants 120 less than 1 nm can be carried. In addition, by making the hole diameter of the holes 111 formed by gaps between particles of zeolitic smaller than the size of the virus, a surfactant of about several nm can be carried. As described above, by including fine holes having a fine hole diameter of less than 1 nm and holes having a hole diameter equal to or more than 10 nm in the film 110, it is possible to carry surfactants sized to fit each of the holes of the fine holes of zeolite and the holes 111 formed by gaps between the particles of zeolite. Therefore, the effective surface area of the surfactant 120 in the coating film 100 can be improved. The weight ratio of the surfactant 120 to the film 110 is preferably 50% or less.

In the case where zeolite is used as the material of the film 110, even if the fine holes of zeolite are 1 nm, the surfactant smaller than 1 nm can be carried. Phenol, cresol, dichlorobenzyl alcohol, amyl metacresol (5-Methyl-2-pentylphenol), and the like can be used as the surfactant 120 of which the size of the surfactant 120 is smaller than 1 nm.

The phenol is preferably exemplified by the following phenol. The phenol has a molecular weight of 94.11, a melting point of about 41 °C, and a solubility of about 83 g/L. As the surfactant 120, 1.5% to 2% can be applied to hands and skin, 2% to 5% to medical devices, and 3% to 5% to the treatment of excreta.

[Chemical Formula 5]

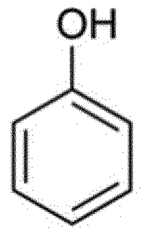

The following cresols are preferably exemplified as cresols. Cresol has a molecular weight of 108.14, a melting point of 11°C to 36°C, and a solubility of about 19 g/L to 27 g/L. As the surfactant 120, 0.5% to 1% can be applied to hands and skin, medical devices, and the treatment of excreta. Cresol is as effective as phenol but is safer than phenol.

[Chemical Formula 6]

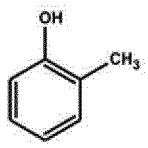
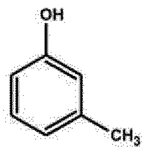
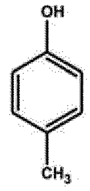

The following 2,4-dichlorobenzyl alcohols can be preferably exemplified as examples of the dichlorobenzyl alcohol. The molecular weight of 2,4-dichlorobenzyl alcohol is 177.03, the melting point is 55°C, and the solubility is about 1 g/L. Those with Cl in positions 2 and 4 are used as pharmaceuticals outside Japan. Note that, the position of Cl is not particularly limited. Dichlorobenzyl alcohol has the oral sterilization function of throat candy and lozenges and antiviral functions.

[Chemical Formula 7]

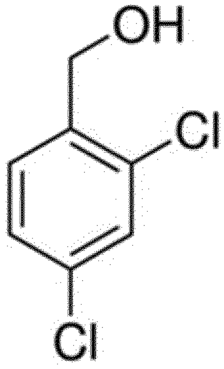

As the surfactant 120, amyl metacresol (5-Methyl-2-pentylphenol) larger than the size of the organic compound described above may be applied. Amyl metacresol is shown below. The amyl metacresol has a molecular weight of 178.27, a melting point of 24°C, and a solubility of 0.1 g/L or less. Amyl metacresol has the oral sterilization function of throat candy and lozenges and antiviral functions.

[Chemical Formula 8]

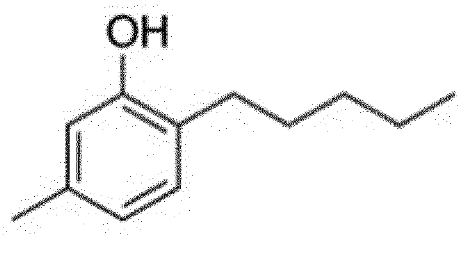

By an organic compound of about 1 nm being carried on the fine holes of the zeolitic of 1 nm, the quantity of the surfactant 120 that can be carried on the film 110 can be increased. In addition, the amount of the surfactant 120 that can be carried on the film 110 can be further increased by carrying the surfactant 120 of about several nm in the gaps between the particles of zeolite. Therefore, the persistence of the antiviral effect of the coating film 100 can be prolonged.

Next, a mechanism for destroying the envelope 202 of the viruses 200 will be explained referring to FIG. 9A to FIG. 12B, using an organic compound used as the surfactant 120 as an example

First, the use of sodium linear alkylbenzene sulfonate as the surfactant 120 will be described referring to FIG. 9A to FIG. 9C. FIG. 9A is a chemical formula of sodium linear alkylbenzene sulfonate. FIG. 9B is a schematic view of a linear sodium alkylbenzene sulfonate. In FIG. 9B, a hydrophilic group 31, a large-hydrophobic structure 32, and a carbon chain 33 are described in a simplified manner. In addition, the large-hydrophobic structure 32 is a large structure such

as a benzene ring, and the carbon chain 33 is connected by about 20 carbon atoms in a straight chain.

FIG. 9C is a drawing showing the mechanism of which sodium linear alkylbenzene sulfonate destroys the envelope 202. The sodium linear alkylbenzene sulfonate is negatively charged. Therefore, in the case where the sodium linear alkyl benzene sulfonate 130 approaches the envelope 202, a film surface layer protein is approached by using the positive charges (as indicated by arrows in FIG. 9C). Many of the fatty acids used in the envelope 202 (the fat-soluble portion of the fatty film) have elongate structures with 16 to 18 carbon chains. Also, in the envelope 202, neighboring molecules are bound by hydrophobic interactions (Van der Waals force) rather than chemical bonds. Therefore, a linear carbon chain having up to about 20 carbon atoms is inserted straight into the fat-soluble portion of the envelope 202, thereby affecting the structure of the envelope 202. Subsequently, by inserting the envelope 202 into the large-hydrophobic structure 32 such as a benzene ring, the stability of a surface of the lipid membrane can be greatly disturbed. Furthermore, the hydrophilic group 31 of the sodium linear alkylbenzene sulfonate can destabilize the envelope 202.

In the case where benzalkonium chloride is used as the surfactant 120, since it is positively charged, the surface of the envelope 202 is approached by using a negative charge. Since a subsequent mechanism is the same as the mechanism of sodium linear alkylbenzene sulfonate, a detailed description thereof will be omitted.

Next, cases where dehydroabietic acid is used as the surfactant 120 will be explained referring to FIG. 10A and FIG. 10B. FIG. 10A is the chemical formula for a dehydroabietic acid 140. The dehydroabietic acid 140 has hydrophilic group 41, a highly lipophilic structure 42, and a lipophilic planar structure 43. The highly lipophilic structure 42 is a six-membered ring.

FIG. 10B is a drawing explaining a mechanism by which dehydroabietic acid destroys the envelope 202. Dehydroabietic acid is negatively charged. Thus, in the case where the dehydroabietic acid 140 approaches the envelope 202, positive charges of the proteins on the film surface are used to approach the envelope 202 (as indicated by the arrows in FIG. 10B). As explained in FIG. 9C, the fatty acids of the envelopes 202 are elongated. Therefore, the lipophilic planar structure 43 of dehydroabietic acid can be smoothly inserted between fatty acids. By inserting the planar structure 43 between the fatty acids, it is possible to further widen a space between the fatty acids. Subsequently, the stability of the surface of the lipid membrane can be greatly disturbed by inserting a lipophilic planar structure 43 having a large lipophilicity such as a six-membered ring into the film. In addition, the hydrophilic group 41 of dehydroabietic acid can destabilize the envelope 202.

Next, the use of chlorhexidine as the surfactant 120 will be explained referring to FIG. 11A to FIG. 12B. FIG. 11A is the chemical formula of chlorhexidine 150. FIG. 11B is a schematic view of the chemical formula of chlorhexidine. In FIG. 11B, chlorhexidine has structures 51a and 51b having many positive charges and large structures 52a and 52b. The large structures 52a and 52b are six-membered rings.

FIG. 12A is a drawing explaining a mechanism by which chlorhexidine destroys the envelope 202. The chlorhexidine 150 is positively charged due to its high content of N. Therefore, in the case where the chlorhexidine 150 approaches the envelope 202, the negative charges on the envelope 202 are used to approach the envelope (as indicated by the arrows in FIG. 12A). However, many positive charges are required to bind firmly to the surface of the envelope 202. Subsequently, the large structures 52a and 52b such as the six-membered ring can be inserted to the surface of the film to greatly disturb the stability of the lipid membrane. Since the positive charge of chlorhexidine and the negative charge of the surface of the envelope 202 are firmly bonded to each other, it is possible to prevent the chlorhexidine from being peeled off from the surface of the envelope 202. In addition, the hydrophilic group of chlorhexidine can destabilize the envelope 202.

FIG. 12B is a drawing explaining a mechanism by which chlorhexidine destroys a membrane protein (for example, the spikes 203). A mechanism by which chlorhexidine approaches the envelope 202 is as described in FIG. 12A. However, many positive charges are required to bind firmly to the surface of the envelope 202. Subsequently, some of the large structures 52a, 52b and positive charges, such as the six-membered ring, bind to the spikes 203 and greatly destroy the stability of the spikes 203. In addition, the hydrophilic group of chlorhexidine can destabilize the envelope 202.

<Mechanism for Destroying Viruses 2>

Next, a mechanism for destroying the non-enveloped viruses on the surface of the coating film 100 will be explained. FIG. 13 is a diagram explaining a mechanism for destroying the non-enveloped virus on the surface of the coating film 100 according to an embodiment of the present invention. FIG. 13 shows an example of the non-enveloped virus.

The noroviruses will be exemplified as a non-enveloped virus 200A shown in FIG. 13. A virus 200A has a positive-stranded single-stranded RNA 211 as the virus genome. The virus 200A consists of an RNA 211 covered by a protein capsid 222 outer shell. The surface of the capsid 222 shows hydrophilicity (positive charge, negative charge) or lipophilicity depending on the location.

A partial area 250 of the virus 200A will be described in greater detail. In the case where the virus 200A is

adhered to the coating film 100, if the surface of the capsid 222 is a lipophilic group, the surfactant 120 interacts with the virus 200A using the lipophilic group. If the surface of the capsid 222 is a hydrophilic group, the surfactant 120 interacts with the virus 200A using the hydrophilic group. In this way, the surfactant 120 acts on the capsid 222 to denature the protein, thereby destroying the three-dimensional structure of the virus 200. This causes the virus 200A to lose infectivity.

As described above, according to the coating film 100 according to an embodiment of the present invention, it is possible to exert an antivirus effect on both of the enveloped viruses and the non-enveloped viruses.

The surfactant dissolved in the droplet solution 210 can decompose the viruses 200 and 200A in the droplet solution 210, that is, decomposing the envelope by the lipophilic group and decomposing the virus by an attack of the hydrophilic group on the protein can be proceeded in both ways. Further, the wettability due to the presence of the surfactant 120 on the surface of the film 110 allows the viruses 200 and 200A to be destroyed at the same time as adhering to the surface of the film 110.

In addition, the surface of the coating film 100 according to an embodiment of the present invention has a friction coefficient μ of about 1. The surface of the coating film 100 is not slimy and can have a velvety texture.

<Method for Producing Coating Film 1>

Next, a method for producing the coating film 100 will be described referring to FIG. 14A to FIG. 14C.

FIG. 14A is a diagram explaining a process of forming a film 110 having holes capable of carrying the surfactant 120 on the substrate 101. Here, the film 110 is formed using an aerosol deposition method (Aerosol Deposition Method: AD method). An aerosol is a mixture of air or an inert gas and fine particles. The AD method is a method in which an aerosol is sprayed from a nozzle toward a substrate to collide with the substrate, and a film containing fine particles is directly formed on the substrate. In the case where the film 110 is formed by the AD method, the film formation can be performed at room temperature without damaging the substrate 101 and without impairing the properties of the fine particles serving as a raw material. Here, using the AD method, 3 to 20 L/min as the flow rate of the gas, air or nitrogen as the carrier gas, and the vacuum is 100 to 10 kPa. At this time, it is preferable that 5% of the fine particles to be mixed with the gases have a particle size equal to or less than 100 nm, and the mean particle size is 100 nm or more and 10 μm or less. Further, the material of the fine particles is not limited to one kind, and a plurality of kinds may be mixed. The film thus formed can form appropriate holes between the fine particles. As a result, the film 110 which is the porous film can be formed on the substrate 101. The thickness of the porous film formed by the AD method is, for example, 1 μm to 10 μm.

Next, the film 110 formed on the substrate 101 is penetrated with a solution containing the surfactant 120. FIG. 14B is a diagram explaining a state after penetration of the film 110 formed on the substrate 101 with the solution 121 containing the surfactant 120. Here, the solution 121 containing the surfactant 120 is a solution in which the surfactant 120 is dissolved in a solvent. As the solvent, water or an organic solvent capable of dissolving the surfactant 120 is used. The solution 121 containing the surfactant 120 penetrates into the film 110 through the holes 111 formed on the surface thereof.

For example, in the case where titanium dioxide is used as the film 110, the holes 111 formed in the film 110 are through-hole type, and the holes 111 have an intricately convoluted structure from side to side. Therefore, the surfactant 120 penetrates the inside of the holes 111 by a capillary effect and diffusion.

In addition, in the case where zeolite is used as the film 110, the holes 111 formed in a film 119 include holes having a hole diameter of 1 nm or less and holes having a hole diameter smaller than the virus size. Therefore, for example, an organic compound having a size less than 1 nm and an organic compound having a size less than 10 nm can be used as the surfactant 120 in accordance with the hole diameter of each of the holes. In this case, first, the solution containing the surfactant 120 of the organic compound having a size less than 1 nm may be penetrated, and then the solution containing the surfactant 120 of the organic compound having a size of several nm may be penetrated. Solutions containing a surfactant 120 mixed with the organic compound having the size less than 1 nm and the organic compound having the size of several nm may also be penetrated. As a result, the surfactant having the size less than 1 nm is carried in the fine holes of about 1 nm of zeolite, and the surfactant having the size of several nm is carried in the holes formed by the gaps between the particles of zeolite.

Finally, by evaporating the solvent of the solution 121 containing the surfactant 120 contained in the film 110, the surfactant 120 is carried in the holes 111 of the film 110. The film 110 is allowed to dry naturally in air at room temperature (25°C). Alternatively, if the surfactant 120 and the substrate 101 do not undergo thermal denaturation, a heat treatment may be performed at a about 100°C or less.

As shown in FIG. 14C, the coating film 100 according to an embodiment of the present invention can be produced by the above-described process.

In the case of forming a porous film on a substrate, there is a method for forming a film by mixing porous particles and a binder. However, in the case where the porous particles and the binder are mixed, the binder blocks the

fine holes of the porous particles, which may reduce the amount of surfactant that can be adsorbed to the fine holes. Therefore, there is a possibility that the film thickness of the porous film formed on the substrate increases. On the other hand, methods for forming the porous film on the substrate without using the binder include a method for forming the porous film using phase separation, a method for forming a porous metal film by blowing a gas into a molten metal, and a method for forming a porous silica film by a sol-gel method. However, all these methods require special conditions, which may alter or destroy the material.

In contrast, according to a method for producing a coating film 100 according to an embodiment, the porous film is formed by the AD method. By using the AD method, it is possible to form a bond between the porous particles and the porous particles and form a bond between the porous particles and the substrate 101. As described above, by using the AD method, the porous film can proceed at normal temperature without damaging the material, the properties of the porous grains as the raw material are not impaired, and the porous film can be formed as the film 110 without using a binder. Therefore, the surfactant 120 can be carried without unnecessarily increasing the film thickness of the film 110 formed on the substrate 101. In addition, since the porous film formed by the AD method is formed by colliding the particles with the substrate, in the case where the substrate hardness is equal to or less than a hardness of the raw material particles to be sprayed, the anchoring layers having a thickness of 50 nm to 500 nm are formed. Therefore, the adhesion of the porous film to the device material can be greatly improved to 10 MPa or more, resulting in a highly durable coating film.

<Method for Producing a Coating Film 2>

Next, a method for producing the coating film 100A will be explained with reference to FIG. 15A to FIG. 15D. In the manufacturing method shown in FIG. 15A to FIG. 15D, a method for producing the coating film 100 by depositing porous particles 10 using the porous particles 10 on which the surfactant 120 is carried will be described.

First, the porous particles are penetrated into a solution containing the surfactant 120A, so that the surfactant 120 is carried on the porous particles.

FIG. 15A is an external view of the porous particles 10 on which the surfactant 120 is carried. A plurality of fine holes 112 are present on the surface of the porous particles 10. The surface and the fine holes 112 of the porous particles 10 are carried by the surfactant 120A. FIG. 15B is a diagram explaining a cross section of the porous particles 10. The porous particles 10 are, for example, porous silica. The porous silica fine holes 112 contain the surfactant 120A. As long as it is carried by the fine holes of the porous particles 10, the surfactant 120A may not be adhered to the surface. A particle size of the porous particles 10 is, for example, 100 nm or more and 50 μm or less. The cationic surfactant can be used as the surfactant 120A carried on the fine holes 112, for example. For example, tetradecyltrimethylammonium bromide (hereinafter abbreviated as TTAB), dodecyltrimethylammonium bromide (hereinafter abbreviated as DTAB), or the like are used as the cationic surfactant.

FIG. 15C is a diagram explaining a process of forming the porous particles 10 on the substrate 101 by the AD method. In this example, the film 110 is formed by using the AD method, using 1 to 10 L/min as the flow rate of the gas, air or nitrogen as the carrier gas, and a vacuum is 100 to 10 kPa. In this case, it is preferable that a particle size of the fine particles mixed with the gases has a particle size having a mean particle size of 100 nm or more and 50 μm or less.

Through the above process, as shown in FIG. 15D, the coating film 100A according to an embodiment of the present invention can be produced.

In the case where the porous film is formed using the porous particles carrying the surfactant on the substrate, the surfactant 120 may evaporate if the film-forming temperature increases. Therefore, there is a possibility that the surfactant 120 carried on the porous film formed on the substrate is reduced, and thus the antiviral effect cannot be exerted.

On the other hand, according to a method for producing the coating film 100A according to an embodiment of the present invention, the porous particles carrying the surfactant 120A are formed by the AD method. By using the AD method, the porous film can be formed at room temperature. Therefore, in the film forming process, the porous particles can be deposited while the surfactant 120A is carried without evaporating the surfactant 120A. Further, according to the AD method, since the film 110 can be formed thickly, the loading of the surfactant 120 can be increased accordingly.

Further, a method for forming the raw material particles carrying such a surfactant at room temperature by the AD method enables the surfactant to be carried not only in the porous film but also in the independent-holes inside the film in the case of using the porous film having the independent-holes described in FIG. 2A and FIG. 2B and FIG. 8A and FIG. 8C.

The coating film 100 according to an embodiment of the present invention may include a base film 102. FIG. 16A is a cross-sectional view of a coating film 100B provided on the substrate 101. The base film 102 is provided between the substrate 101 and the film 110. The base film 102 may be provided between the substrate 101 and the coating film 100A. FIG. 16B is a cross-sectional view of a coating film 100C provided on the substrate 101. A base film 102A is provided between the substrate 101 and the film 110A. As the base film 102A, for example, an organic resin such as polycarbonate, polyethylene, polypropylene, polyvinyl alcohol, or polyamide resin, or a metallic thin film is used. The

thickness of the base film 102A is 50 nm or more and 5 μm or less. The base film 102A is formed by coating the above-described materials on the substrate 101 and curing the materials. In the case where the film 110 is formed using the AD method, it is preferable that the film 110 has a hardness. Therefore, since base films 102 and 102A have a certain degree of hardness, a structure of the fine particles is appropriately deformed and adhered to form the porous film when the aerosol is ejected from the nozzle toward the substrate 101 and collides with the substrate 101.

By providing the base film 102 between the substrate 101 and the film 110, an anchoring layer having a thickness of 50 nm to 500 nm is formed between the substrate 101 and the film 110, thereby improving adhesion. As used herein, the term "anchoring layer" refers to an uneven layer formed by spraying the raw material particles forming the film 110 onto a substrate by the AD method, and causing the collided particles to bite into the substrate having hardness equal to or lower than that of the particles. For example, even if the surface of the coating film 100 is mechanically rubbed, it is possible to prevent the coating film 100 from being peeled off from the substrate 101. In addition, in the case where the coating film 100 is provided in a flexible solid, even if it is bent, it is possible to prevent the coating film 100 from being peeled off from the substrate 101. Note that, the same effect as the effect obtained by the base film 102 can be obtained for the base film 102A.

In addition, in the case where the porous film is coated on a surface of glass or a transparent resin material with a ceramic material, it is possible to impart light transmittance, but since the film is porous, incident light is scattered due to a difference in the refractive index with air in the holes, and does not have transparency. On the other hand, in the case where a surfactant having a high refractive index is carried on a ceramic porous film, light scattering is greatly suppressed, and it is also possible to impart the transparency to a degree that sufficient visibility can be obtained depending on the purpose.

For example, since a refractive index of surfactants is usually 1.3 to 1.6 in a dry solid state or a low volatility liquid state, it is formed of a ceramic material having a refractive index of 2.2 or less, and is carried on a fine-sized porous film having a hole diameter of a visible light wavelength or less (300 nm or less), and a highly visible transparent antiviral coating having a HAZE of 10% or less can be realized.

Examples of the article for forming the coating films 100 and 100A, 100B, 100C according to an embodiment of the present invention include a door knob, an electric switch, a keyboard, a handrail, which are touched by a person's hand, footwear, clothing, and a side pad, which are touched by a person's sweat, and a floor material of a toilet, a toilet seat, a seating surface of a passenger car such as a taxi, a filter for water purification and air conditioning, and the like. Further, examples of the article include seats and hand straps of a train, a handrail of an escalator, a building material of a building, a packaging material, and the like. Thus, the coating film 100 according to an embodiment of the present invention can be coated on a wide variety of articles.

In addition, face masks, which are generally used as etiquettes because their effectiveness is pointed out in preventing the spread of infections, are usually made of cloth, paper, or the like, and are opaque, and therefore have problems of preventing the reading of facial expressions of other people and the reading of lips by the deaf during conversation. On the other hand, if a coating having high antiviral properties, antibacterial properties, and high maintaining properties is applied on the transparent resin film in the present invention, it is possible to provide a material having antiviral properties and antibacterial properties in addition to transparency and flexibility, and if it is partially used in a region surrounding the lips of the mask, it is possible to read facial expressions and read the movement of the lips during conversation, and safety is greatly improved even if it is used for a long time due to the antibacterial properties.

According to the coating film 100 according to an embodiment of the present invention, various articles such as a door knob, hand straps of a train which are touched by a person's hand, clothing and footwear, and an interior of a building such as a floor material of a toilet, can have a practical texture, and can be stably and continuously coated with an antiviral active substance on a surface in a long-term durable form. Therefore, even in the case where the virus adheres to the surface of the article and it is difficult to immediately wipe with alcohol, the surfactant contained in the coating film 100 acts to inactivate the viruses.

The coating film 100 according to an embodiment of the present invention has a sustained release effect. Therefore, in the case where the coating film 100 is used for a long period of time, it is preferable to spray, apply, or penetrate the film 110 with the surfactant 120 so that the film 110 can be replenished with the surfactant 120 in the same method after sustained release.

While embodiments of the invention have been explained in detail above, it should be understood that modifications, variations, and changes can be made without departing from the scope of the claims.

In the present invention, it is understood that the present invention provides other effects that are different from the effects provided by above-described embodiments, and those that are obvious from descriptions of the present specification or those that can be easily predicted by a person skilled in the art are to be interpreted as being capable of being brought about by the present invention.

[Examples]

In this example, the results of verification of antiviral, cleaning, and abrasion resistance of a coating film according to an embodiment of the present invention will be described.

[Example 1]

In this example, testing according to ISO 21702 standards using the influenza A virus as the enveloped virus will be described. FIG. 17A to FIG. 17D are diagrams explaining the outline of testing according to ISO 21702 standards.

(Example 1)

As example 1, a 4 cm×4 cm porous film (nano-porous film) of 3 μm of alumina ($Al_2O_3$) was formed on a SUS substrate of 5 cm$\times_5$ cm by the AD method. The porous film was coated with 128 μg/cm$^2$ of chlorhexidine. Example 1 corresponds to the coating film.
In this example, a chemical formula of chlorhexidine is shown below.

[Chemical Formula 9]

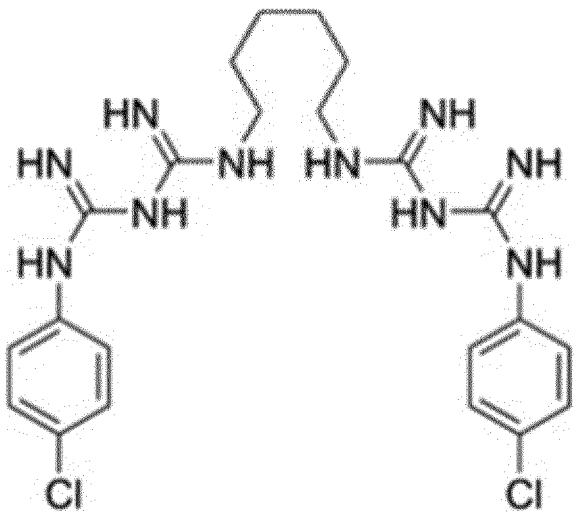

(Comparative Example 1)

As a comparative example 1, 128 μg/cm$^2$ of chlorhexidine was coated to the SUS substrate (5 cm × 5 cm).
Next, the outline of the antiviral test based on ISO21702 will be explained.
As shown in FIG. 17A, 0.4 mL of a virus suspension 302 of the influenza A virus containing $1\times10^7$ PFU/mL was added dropwise per 25 cm$^2$ to test pieces 301 (each of example 1 and comparative example 1) and covered with films 303.
Next, as shown in FIG. 17B, the test pieces 301 were allowed to stand at 25°C for 24 hours while being prevented from being dried. Next, the test pieces 301 were washed with a SCDLP of 10 mL to recover residual viruses. Next, a 10-fold dilution series of the recovered solution was prepared by SCDLP.
Next, as shown in FIG. 17C, diluents were applied to a petri dish 305 cultured with MDCK cells (canine kidney cells) and subsequently cultured (called plaque method).
Next, as shown in FIG. 17D, live cells were stained and areas that were not stained (cells died and detached) were counted. Finally, the viral infection titer was calculated from the count and dilution ratio.
The following formula was used to calculate the viral infection titer.

$$V=(10 \times C \times D)/A$$

V: Viral infection titer per 1 cm$^2$ of a test piece (PFU/cm$^2$)
C: Plaque count
D: Dilution ratio

A: Contact areas between test pieces and virus

Antiviral activity was calculated according to the following formula.

$$\text{Antiviral activity value} = \log(Vb) - \log(Vc)$$

Log(Vb): common logarithm value of viral infection titer per 1 $cm^2$ of the comparative example 1 after 24 hours
Log(Vc): common logarithm value of viral infection titer per 1 $cm^2$ of the example 1 after 24 hours

In the case where the antiviral activity value was equal to or more than 3.0, it was evaluated as having antiviral efficacy.

Table 1 is a table summarizing the results of a comparison between the control polyethylene plate and the example 1. Here, an inactivation rate refers to a rate of inactivation of a virus calculated from the number of active viruses (PFU/mL) of each of a control sample and a test sample. The following equation was used to calculate the inactivation rate.

[Mathematical Formula 1]

$$\frac{\text{Number of viruses with activity in control sample (PFU/mL)} - \text{Number of viruses with activity in test sample (PFU/mL)}}{\text{Number of viruses with activity in control sample (PFU/mL)}} \times 100$$

[Table 1]

| | | Duration | PFU/cm$^2$ | | | log(PFU/cm$^2$) | Antiviral activity | | |
|---|---|---|---|---|---|---|---|---|---|
| | | | 1 | 2 | Average | | R | Residual rate(%) | Deactivation rate(%) |
| Control polyethylene plate | | Omin | 193750 | 237500 | 215625 | 5.33 | - | - | - |
| | | 24hr | 268750 | 156250 | 212500 | 5.33 | - | - | - |
| AD | CHX(128) | 24hr | <6.25 | <6.25 | <6.25 | <0.8 | >4.53 | 0.00294 | 99.99706 |

FIG. 18 is a graph showing the relationship between time (min) and remaining viruses PFU/mL. In the case where the example 1 was compared with the comparative example 1, it was confirmed that the example 1 had a high antiviral effect with an antiviral activity value of 4.53 or more and an inactivation rate of 99.997% or more after 24 hours.
Furthermore, using the example 1 and the comparative example 1, the residual virus was measured after 2 hours. In the example 1, the antiviral activity value at 2 hours was 3.7, and the inactivation rate was 99.98%, demonstrating a high antiviral effect. As described above, it was confirmed that a high antiviral effect can be obtained in the example 1 even in a short time of 2 hours.

[Example 2]

Next, results of evaluating a residual amount of chlorhexidine after a water washing test in the example 1 and the comparative example 1 will be explained.
For the example 1 and the comparative example 1, ultrasonic cleaning was performed for 1.5 mins, 5 mins, 10 mins and 30 mins in an aqueous solution.
FIG. 19 is a result of measuring the Raman peak intensity by Raman scattering spectroscopy after ultrasonic cleaning in the comparative example 1. FIG. 20 is a result of measuring the Raman peak intensity by Raman scattering spectroscopy after ultrasonic cleaning in example 1. In FIG. 19 and FIG. 20, a peak indicated by an arrow is a Raman peak of chlorhexidine (CHX).
As shown in FIG. 19, in the comparative example 1, the Raman peak of chlorhexidine was confirmed in 0 min, but it was confirmed that the Raman peak of chlorhexidine disappeared after 1.5 mins. In contrast, as shown in FIG. 20, in the example 1, the Raman peak of chlorhexidine was confirmed in 1.5 mins, and the Raman peak of chlorhexidine was also confirmed after 10 mins.

[Example 3]

Next, the results of evaluating a residual amount of chlorhexidine after the ball-on-disc (BoD) test in the example 1 will be explained. The ball-on-disk test is a kind of friction wear test, and is a method in which a ball is slid in rotational contact with a test piece at a constant load and speed, a friction force at this time is measured, and an amount of wear after sliding by a predetermined distance is measured.
Conditions for ball-on-disk testing are described below.

Ball Material: Tungsten Carbide (WC)
Ball Diameter: 2 mm
Load: 50 g
Rotary Diameter: 2 mm
Sliding Speed: 60 rpm

For the example 1, a ball-on-disc test was conducted under the above conditions for 0 min, 5 mins, 30 mins and 60 mins.
FIG. 21 is a result of measuring the Raman peak intensity by Raman scattering spectroscopy after a ball-on-disk test in the example 1.
As shown in FIG. 21, in the example 1, the Raman peak of chlorhexidine was confirmed in the test for 5 mins, and the Raman peak of chlorhexidine was also confirmed in the test for 30 mins.
As described above, it was confirmed that the coating film according to the example 1 can inactivate the virus in a short period of time and can have high antiviral properties by using chlorhexidine having high safety as the surfactant. Further, since the surfactant can be carried and fixed by the porous film having excellent durability, it was confirmed that the virus inactivating effect can be sustained for a long period of time even if the surface of the film is cleaned or worn.

## REFERENCES SIGNS LIST

10: porous particle, 101: substrate, 102, 102A: base film, 110, 110A: film, 111, 111A: hole, 112: fine hole, 113: outer shell, 114: hollow, 120, 120A: surfactant, 21: hydrophilic group, 22: lipophilic group, 200, 200A: virus, 202: envelope, 203: spike, 204: matrix, 210: droplet liquid

## Claims

**1.** A coating film comprising:

a surfactant having a hydrophobic or a lipophilic group and hydrophilic group; and
a film having holes on a surface thereof capable of carrying the surfactant.

**2.** The coating film according to claim 1, wherein the surfactant has the lipophilic group of 5 or more carbon atoms and does not evaporate at room temperature.

**3.** The coating film according to claim 1 or 2, wherein the film is a porous film.

**4.** The coating film according to claim 3, wherein a porosity of the porous film is 5% or more and 60% or less.

**5.** The coating film according to claim 1, wherein the surfactant is an abietic acid-based compound.

**6.** The coating film according to claim 1, wherein the surfactant is a chlorhexidine.

**7.** The coating film according to claim 1, wherein a hole diameter of the holes is greater than 10 times as large as a virus size.

**8.** The coating film according to claim 1, wherein a hole diameter of the holes is smaller than a virus size.

**9.** The coating film according to claim 8, wherein the hole diameter of the holes is 1 nm or less.

**10.** The coating film according to claim 1, wherein the lipophilic group of the surfactant is absorbed in the holes on the surface of the film and the hydrophilic group is exposed.

**11.** The coating film according to claim 1, wherein the hydrophilic group of the surfactant is absorbed in the holes on the surface of the film and the lipophilic group is exposed.

**12.** An article having the coating film formed on a surface thereof according to claim 1.

**13.** An article having a coating film according to claim 1 disposed on a surface, the coating film having a transparency of 10% or less in terms of a HAZE value.

FIG.1A

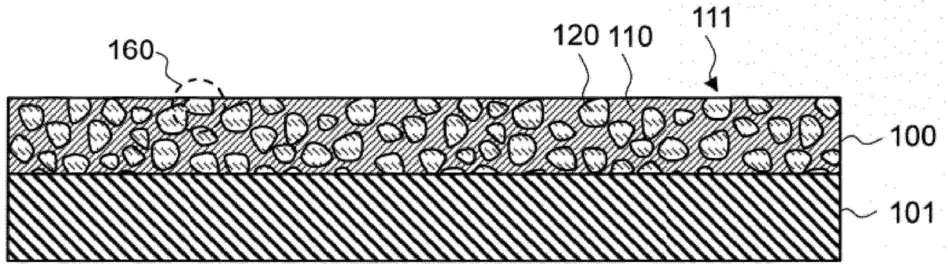


FIG.1B

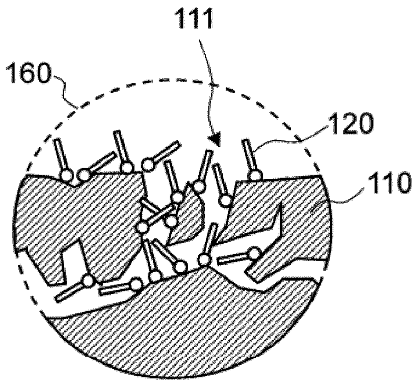


FIG.1C

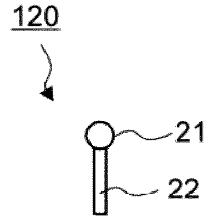

FIG.2A

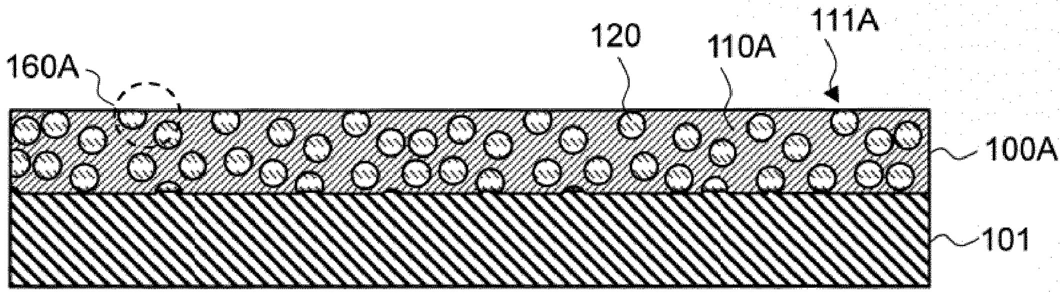


FIG.2B

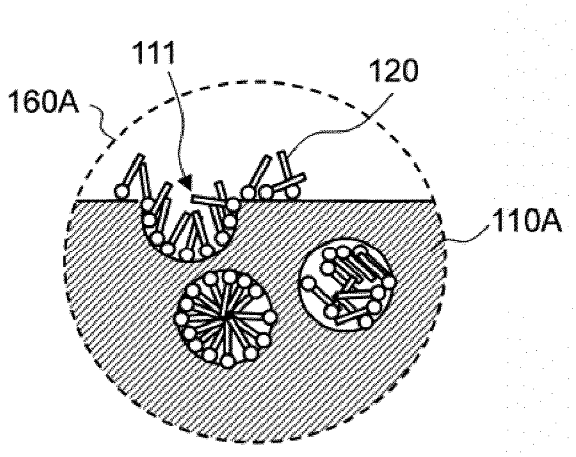

FIG.3

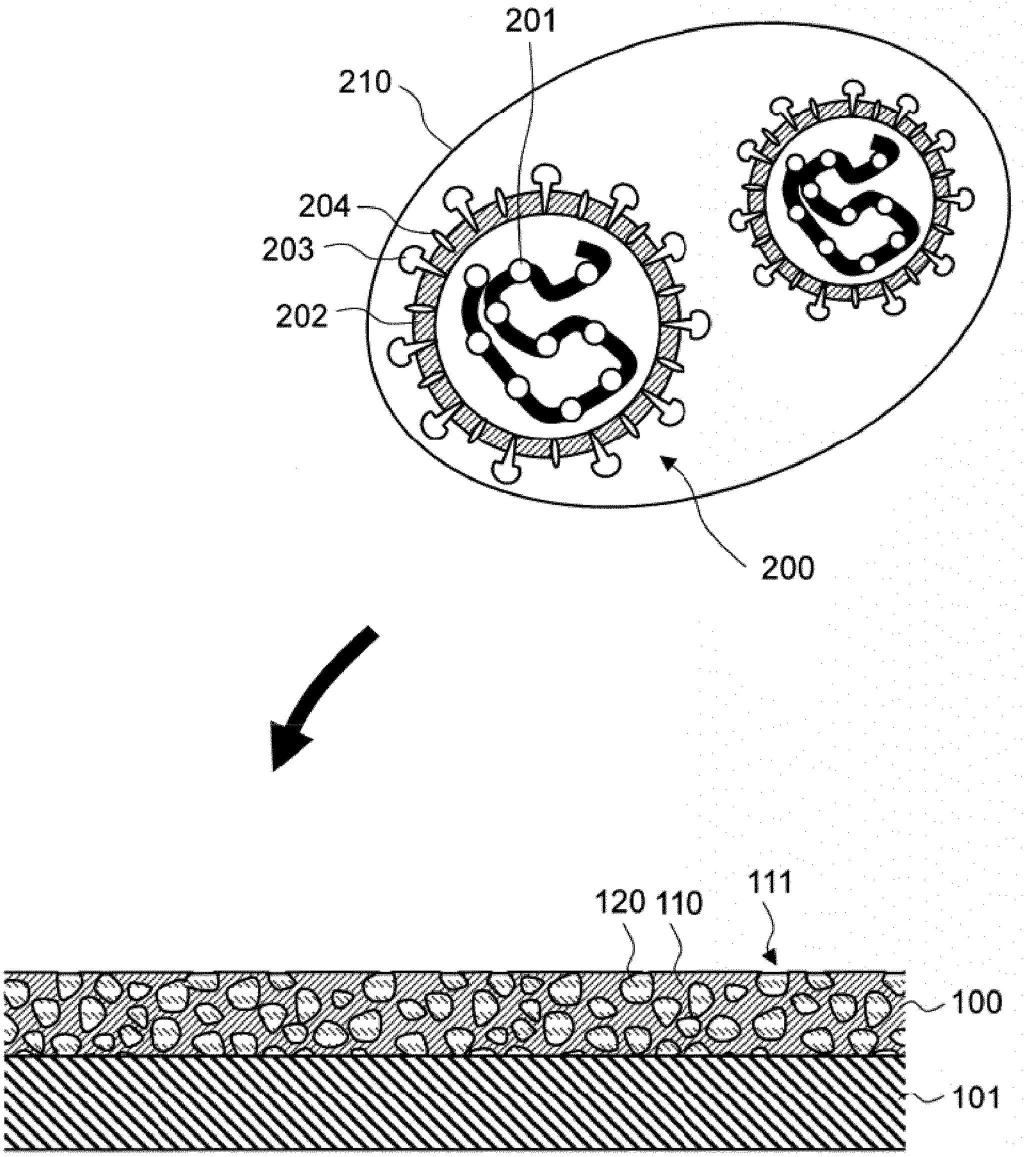

FIG.4A

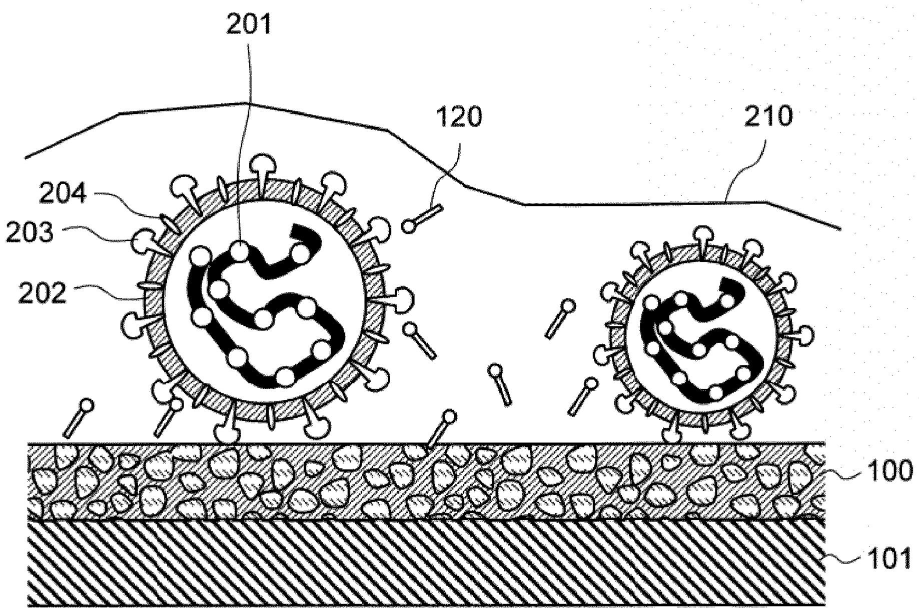


FIG.4B

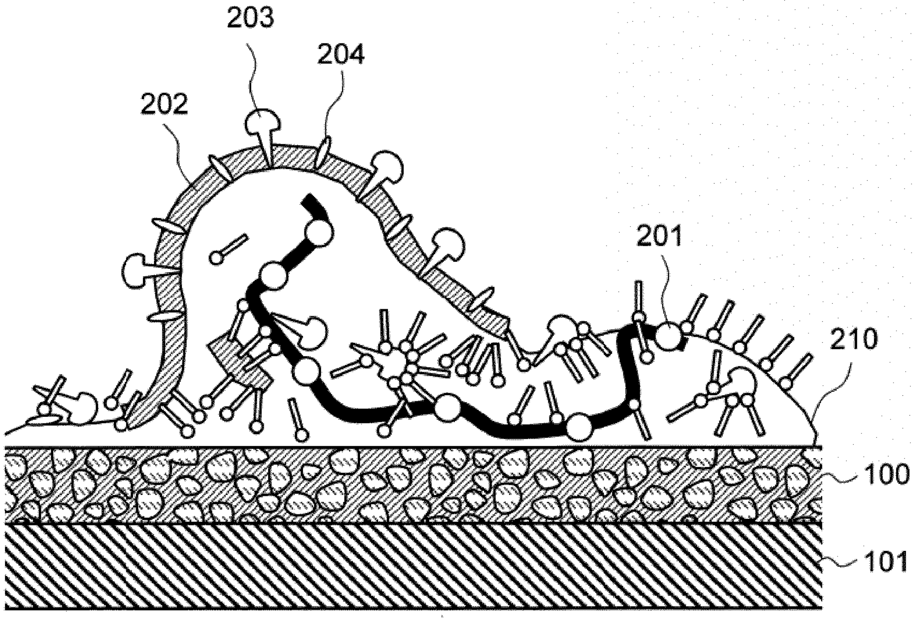

FIG.5A

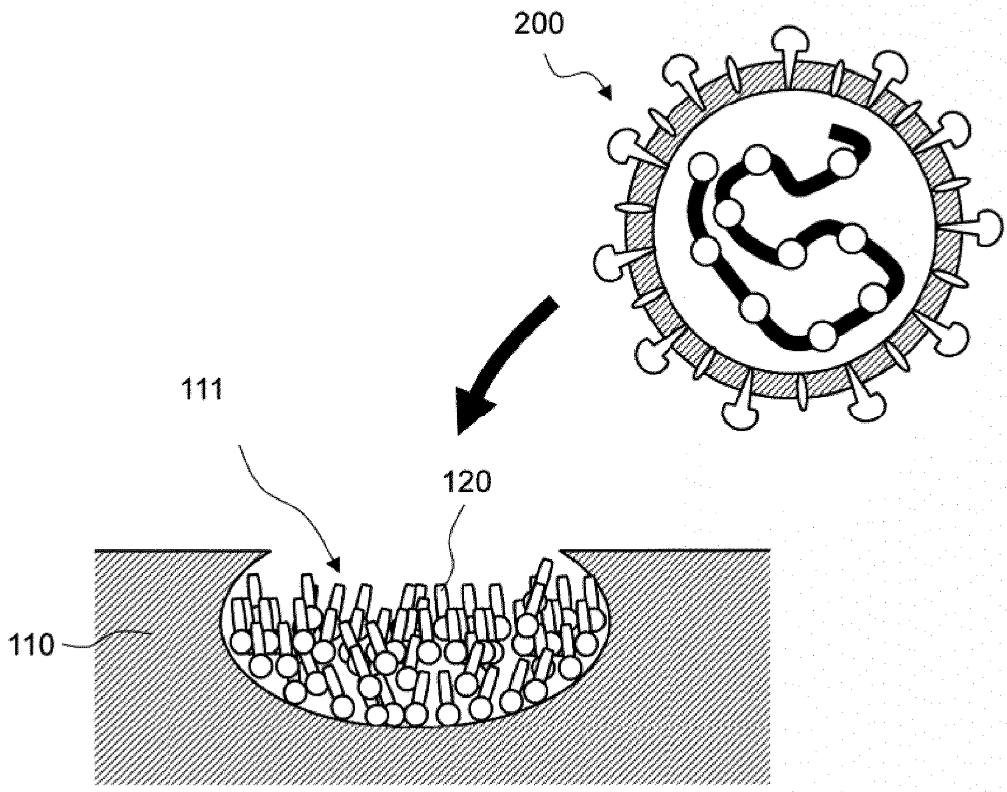


FIG.5B

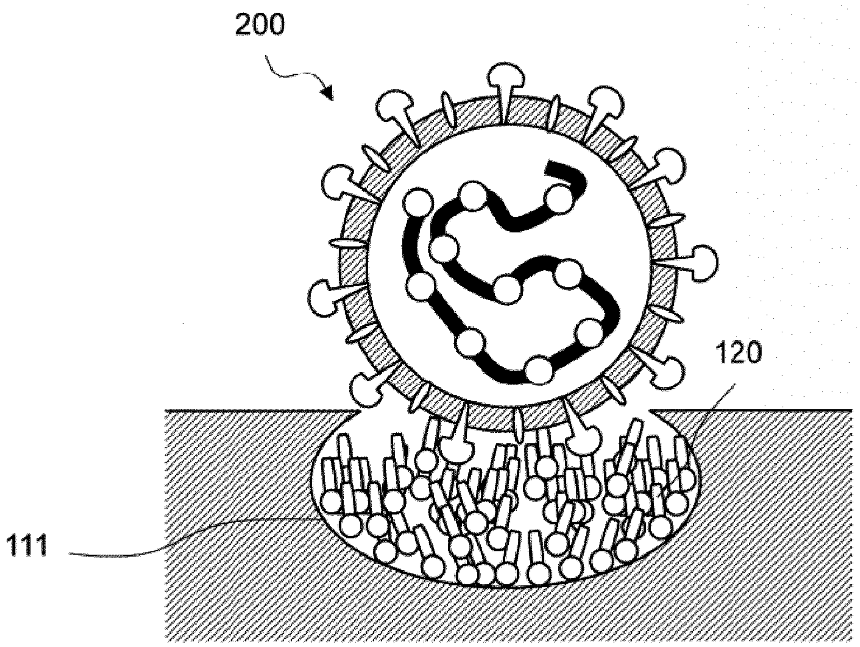

FIG.6A

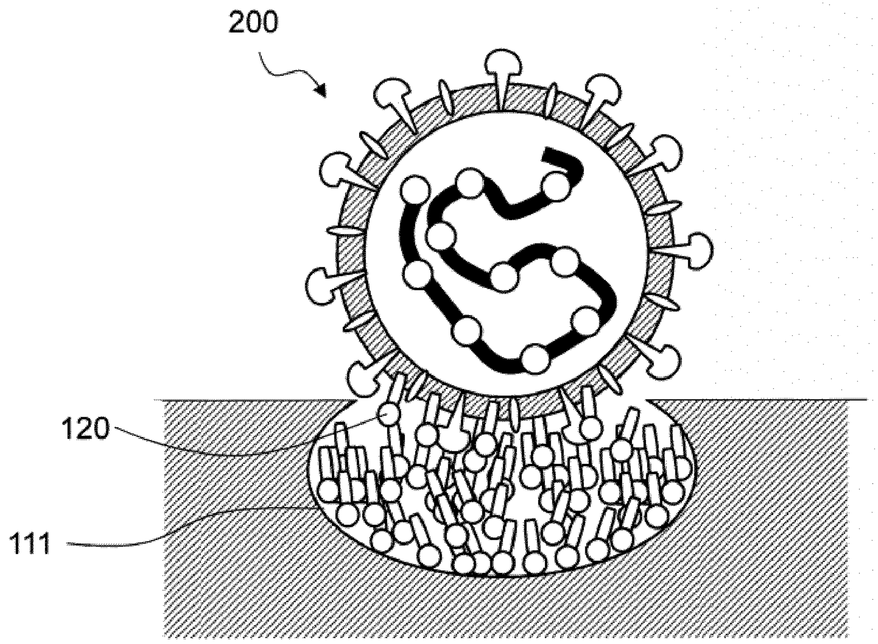


FIG.6B

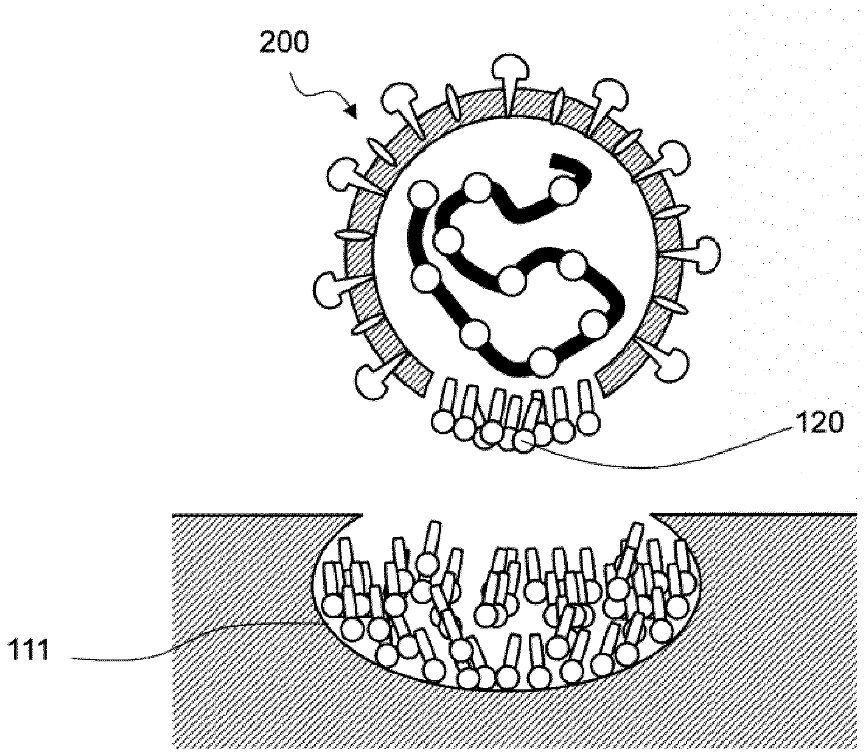

FIG.7A

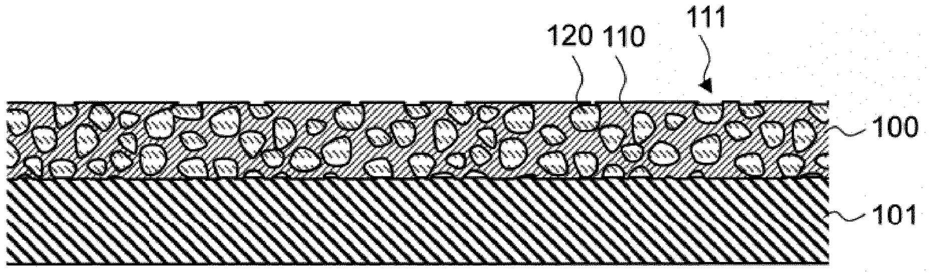


FIG.7B

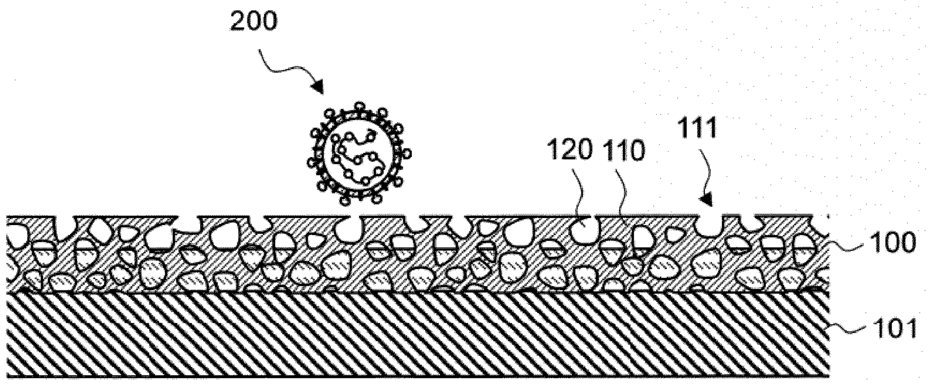


FIG.7C

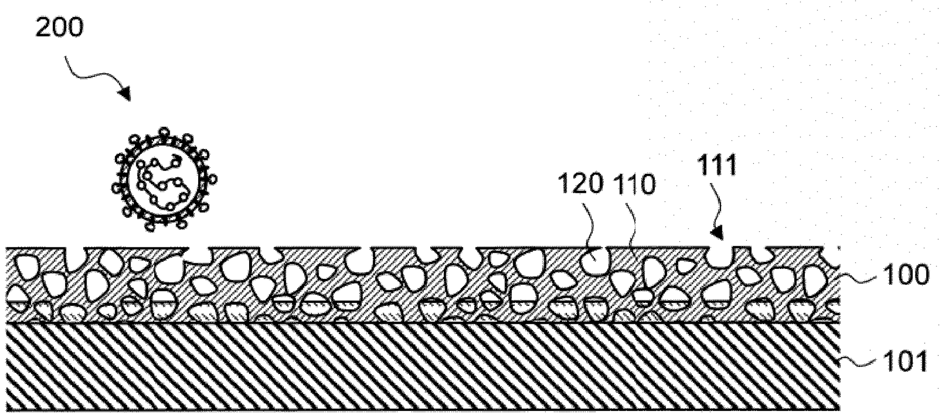

FIG.8A

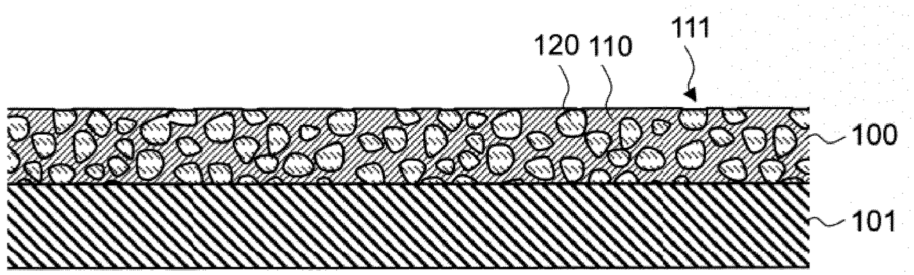


FIG.8B

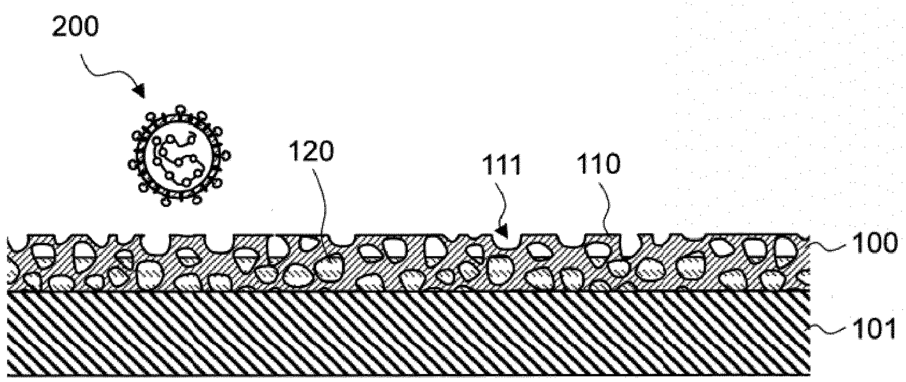


FIG.8C

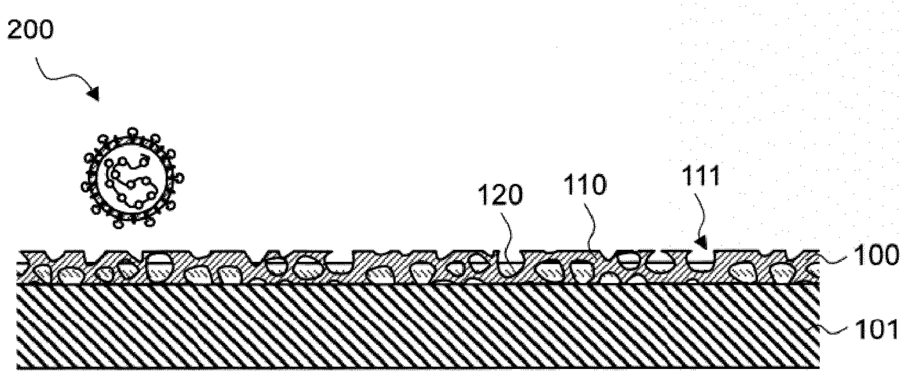

FIG.9A

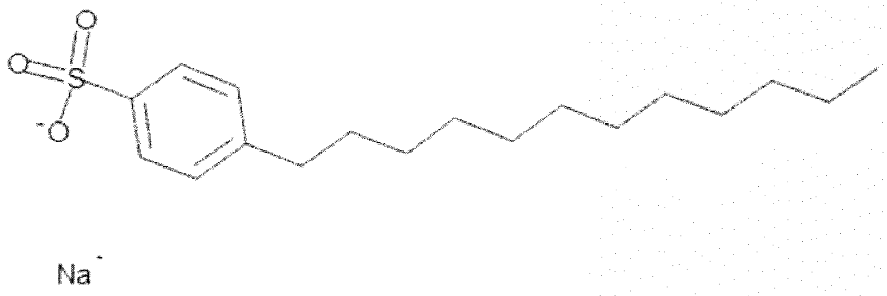

FIG.9B

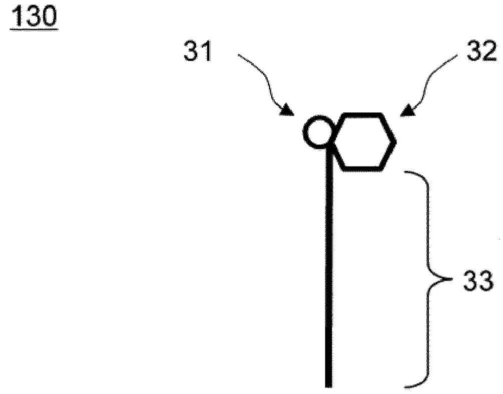


FIG.9C

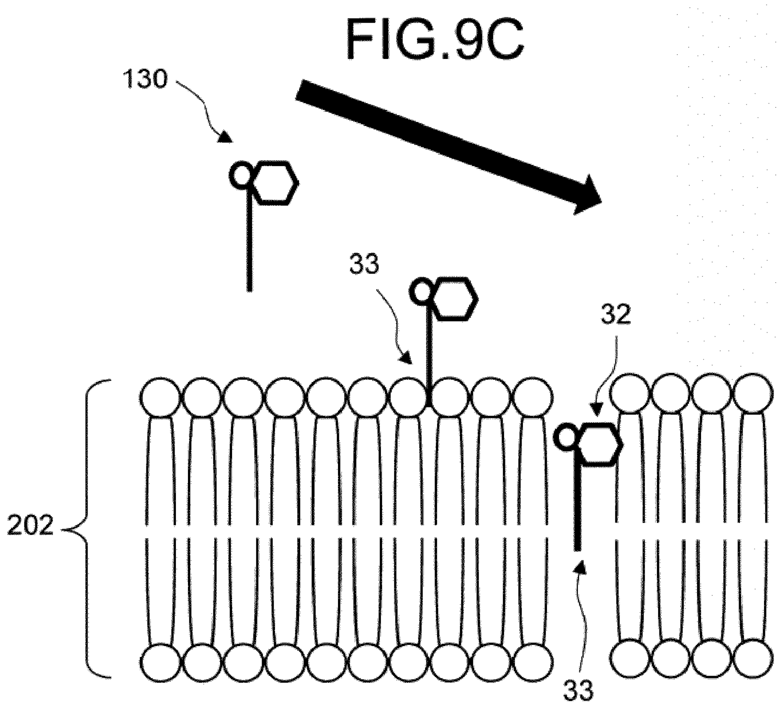

FIG.10A

140

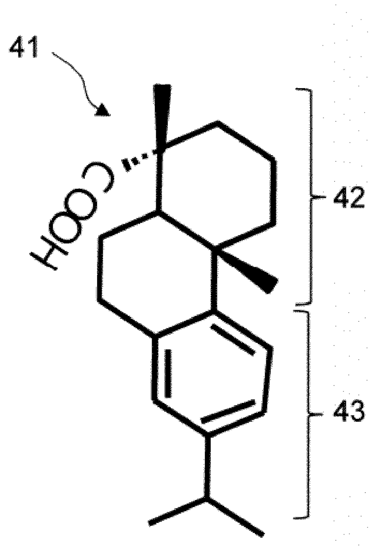


FIG.10B

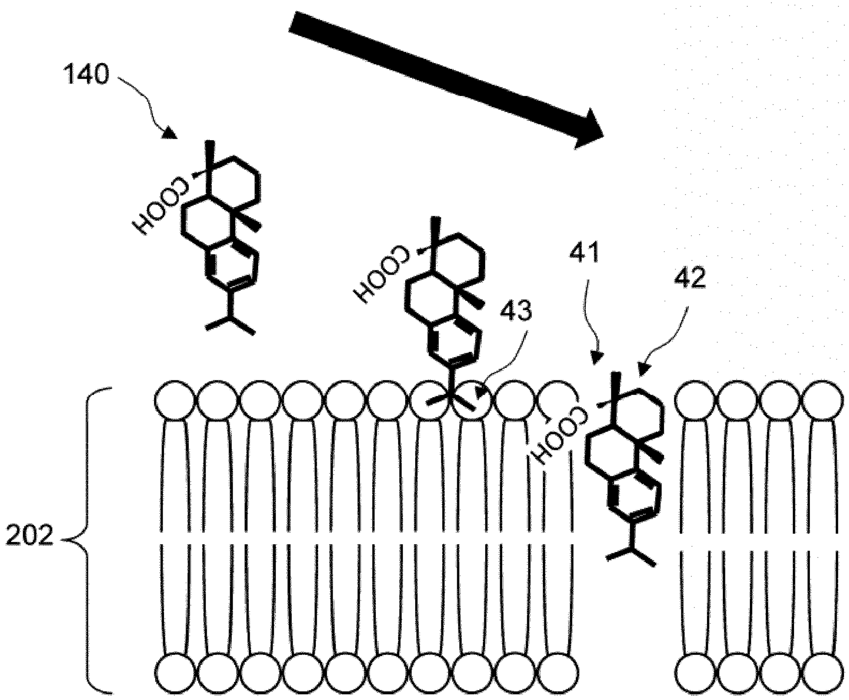

# FIG.11A

150

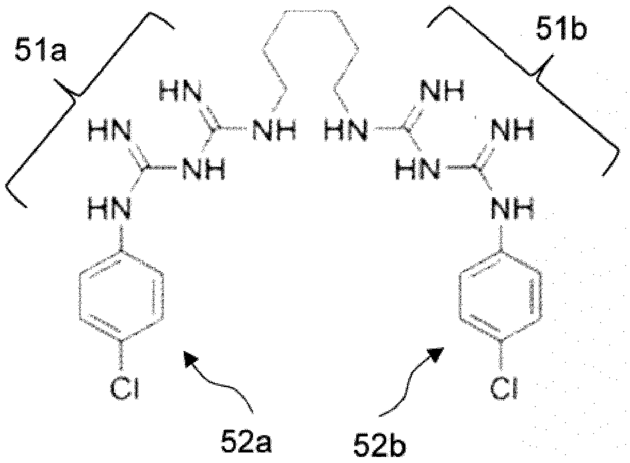


# FIG.11B

150

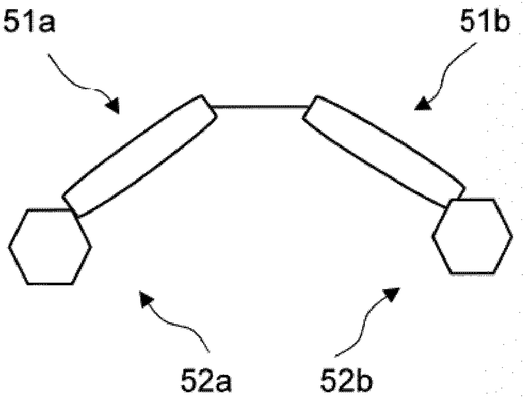

FIG.12A

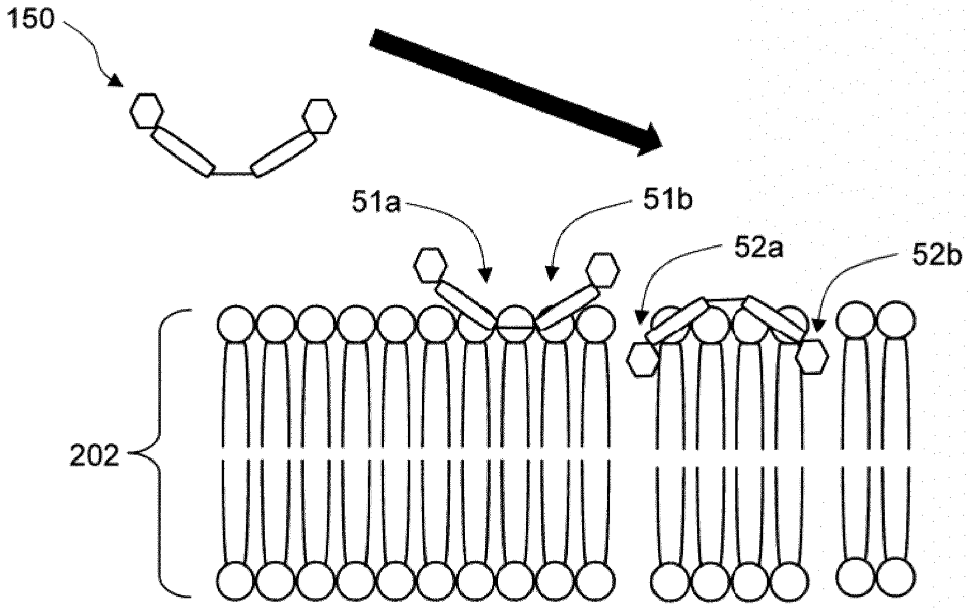


FIG.12B

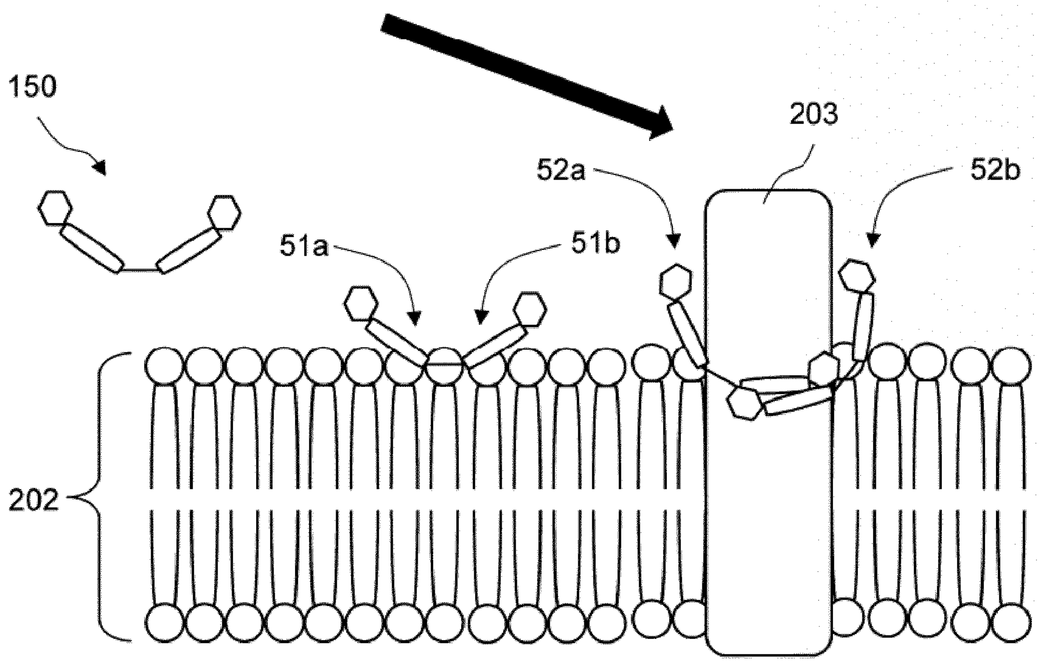

FIG.13

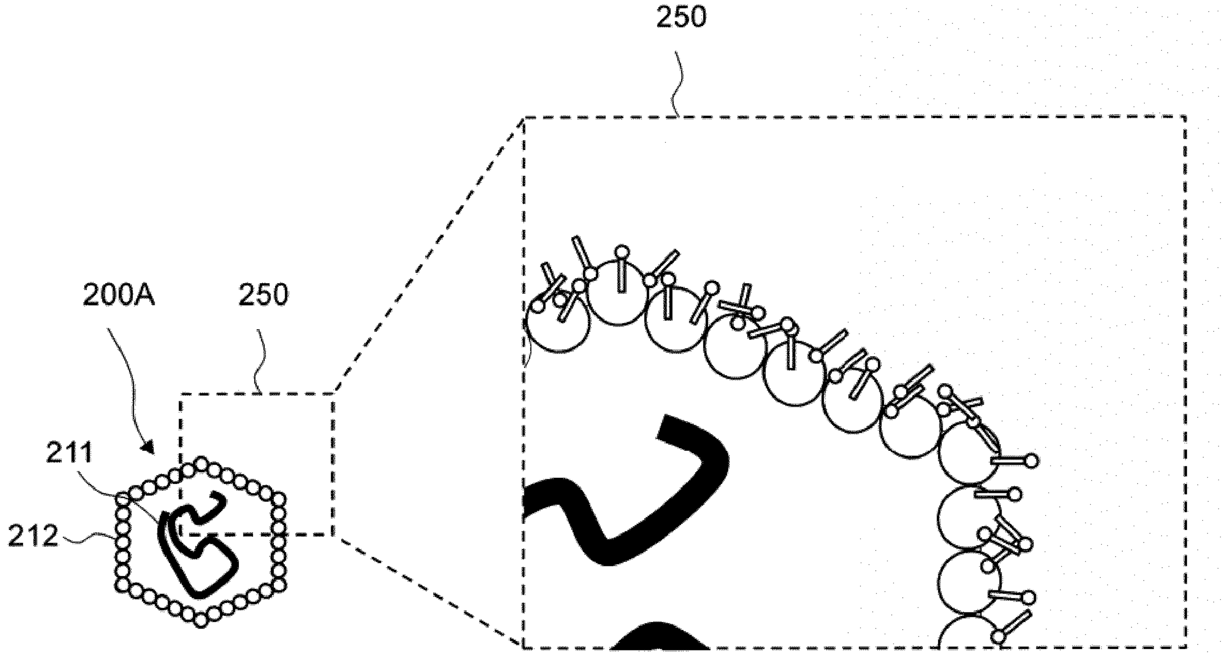

FIG.14A

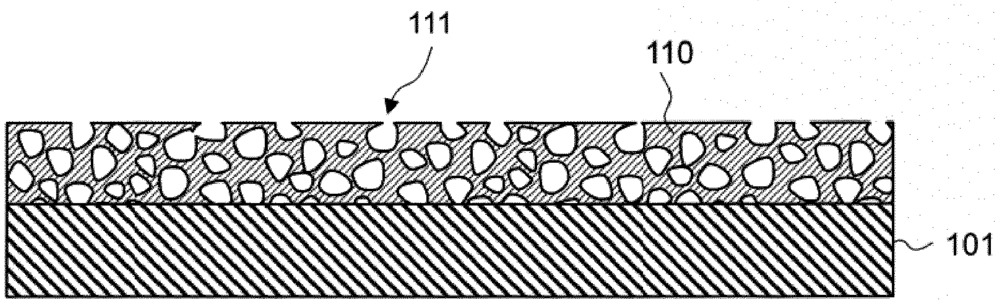


FIG.14B

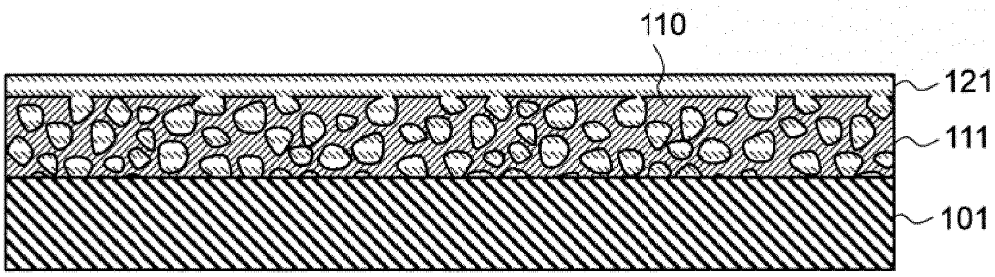


FIG.14C

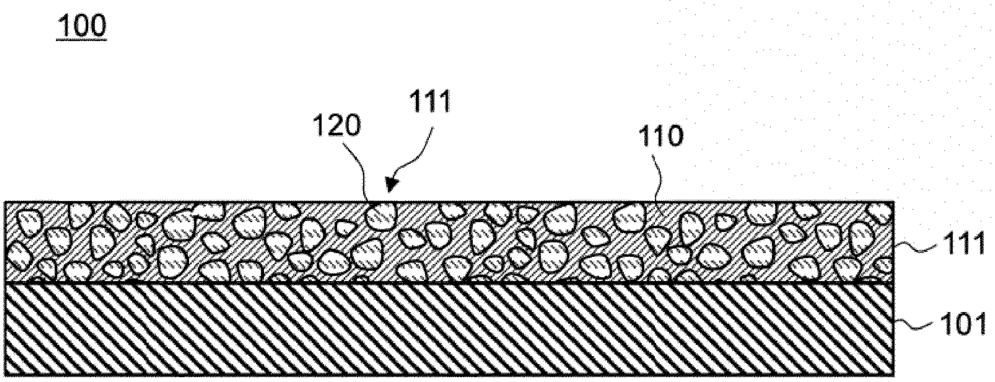

FIG.15A

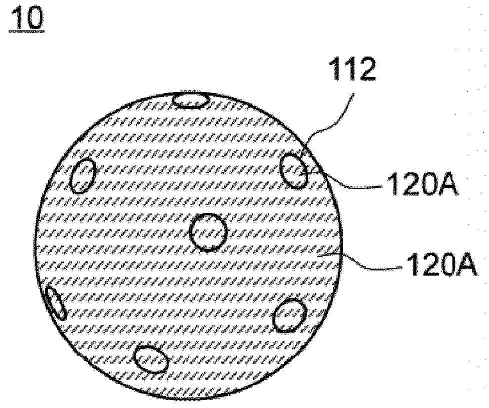


FIG.15B

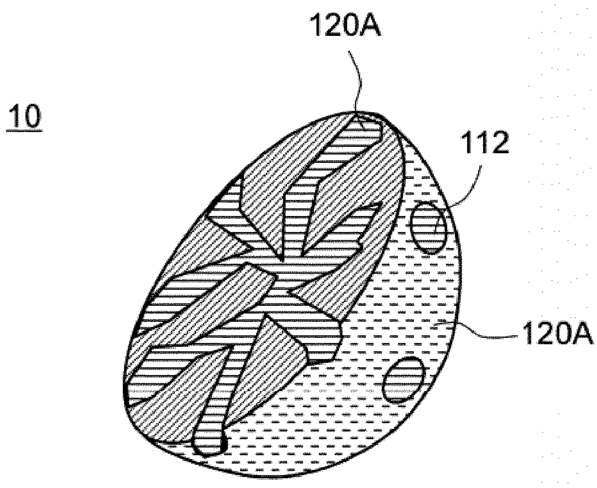

FIG.15C

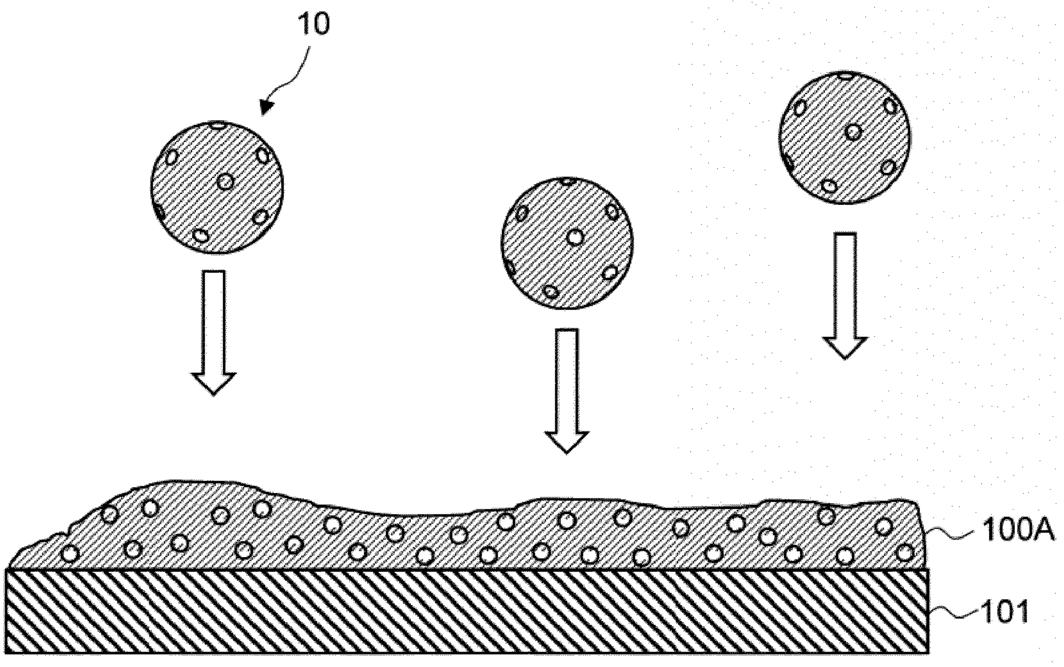


FIG.15D

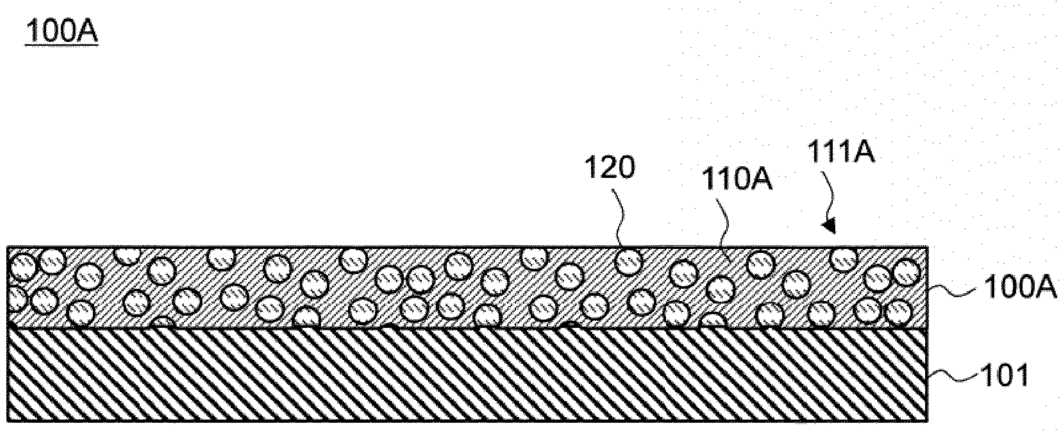

FIG.16A

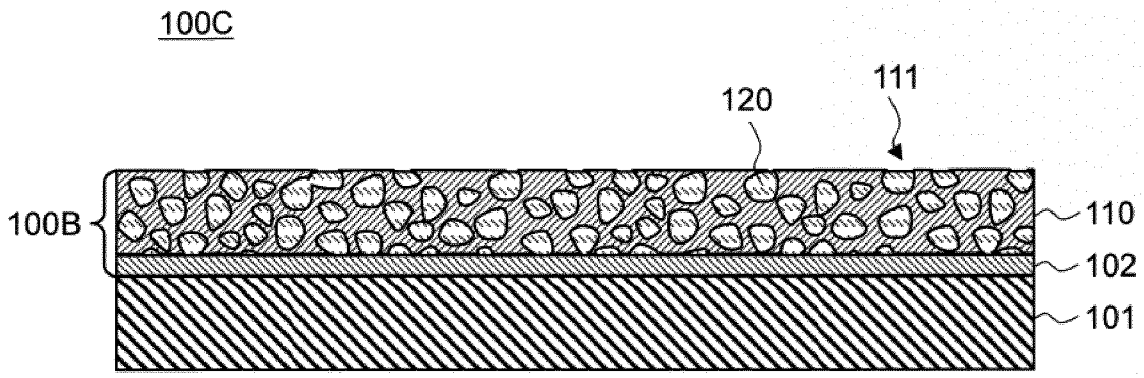


FIG.16B

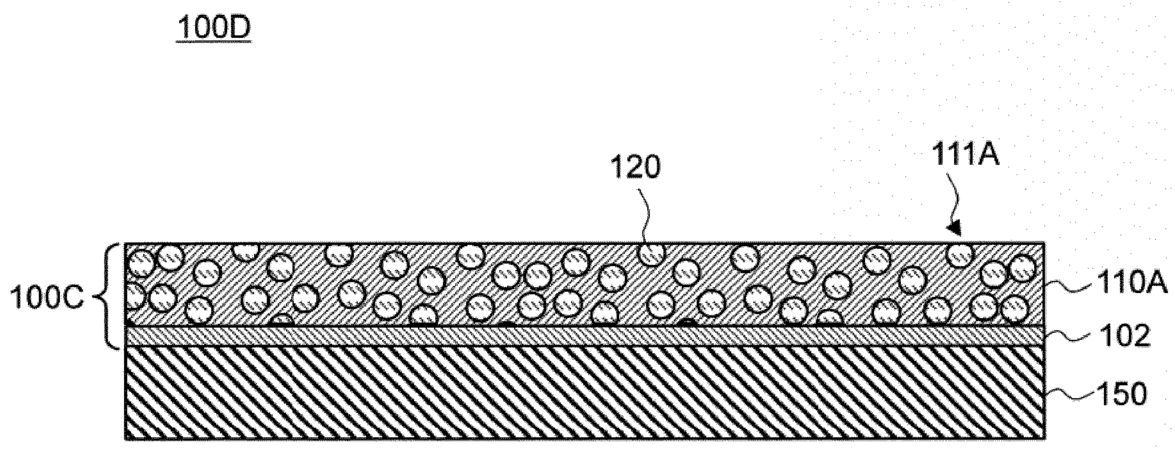

FIG. 17A

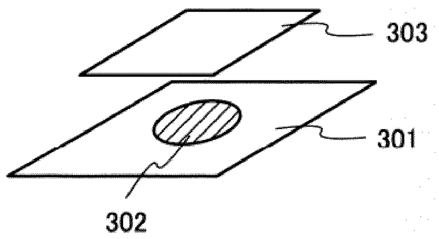


FIG. 17B

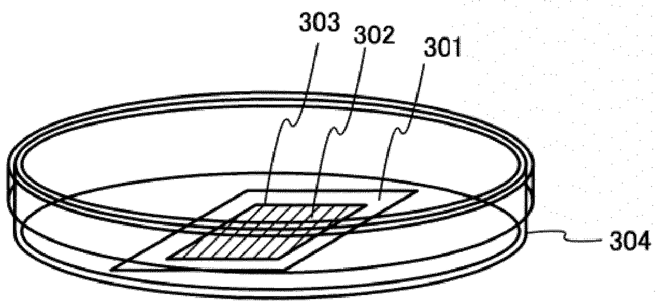


FIG. 17C

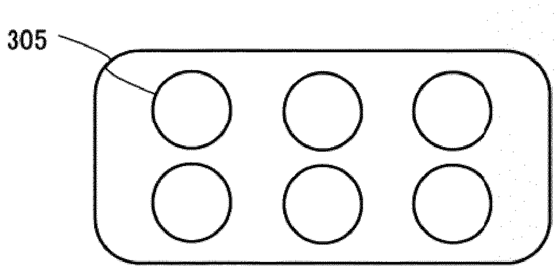


FIG. 17D

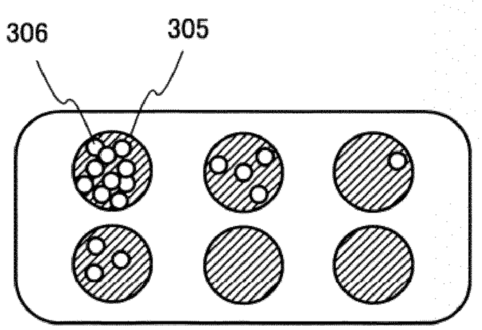

FIG.18

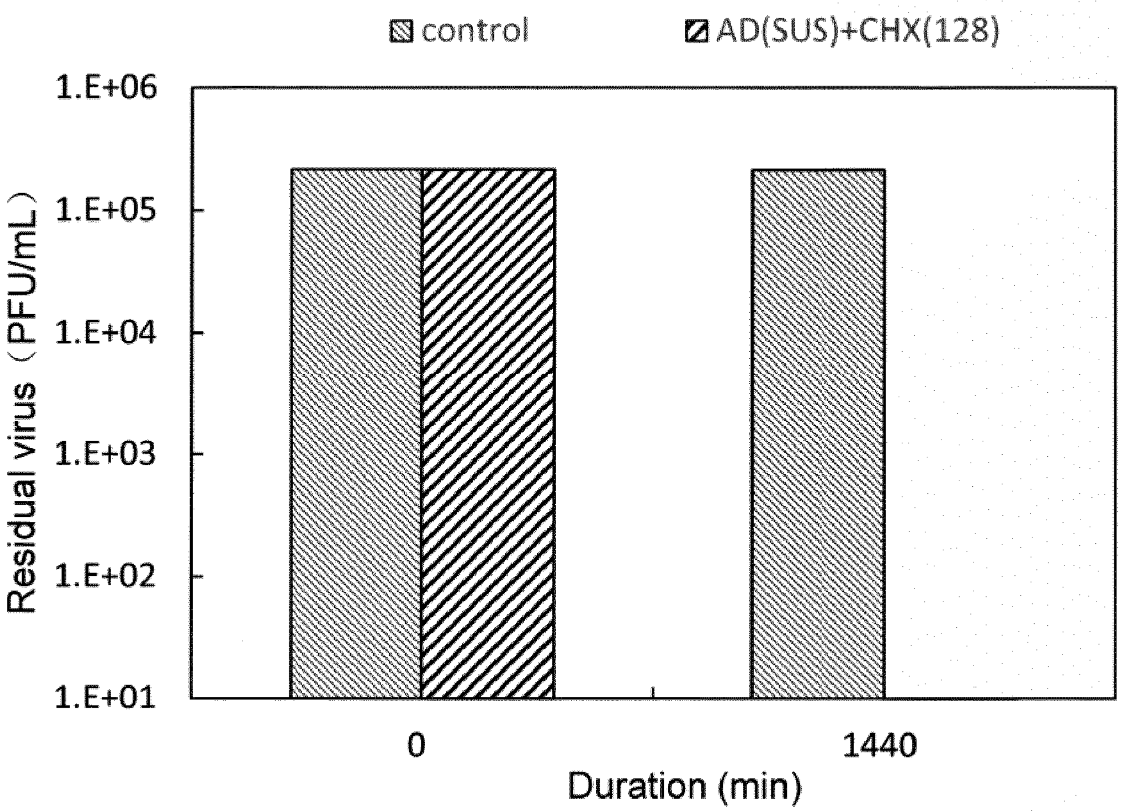
control
AD(SUS)+CHX(128)
1.E+06
1.E+05
1.E+04
1.E+03
1.E+02
1.E+01
Residual virus（PFU/mL）
0
1440
Duration (min)

FIG.19

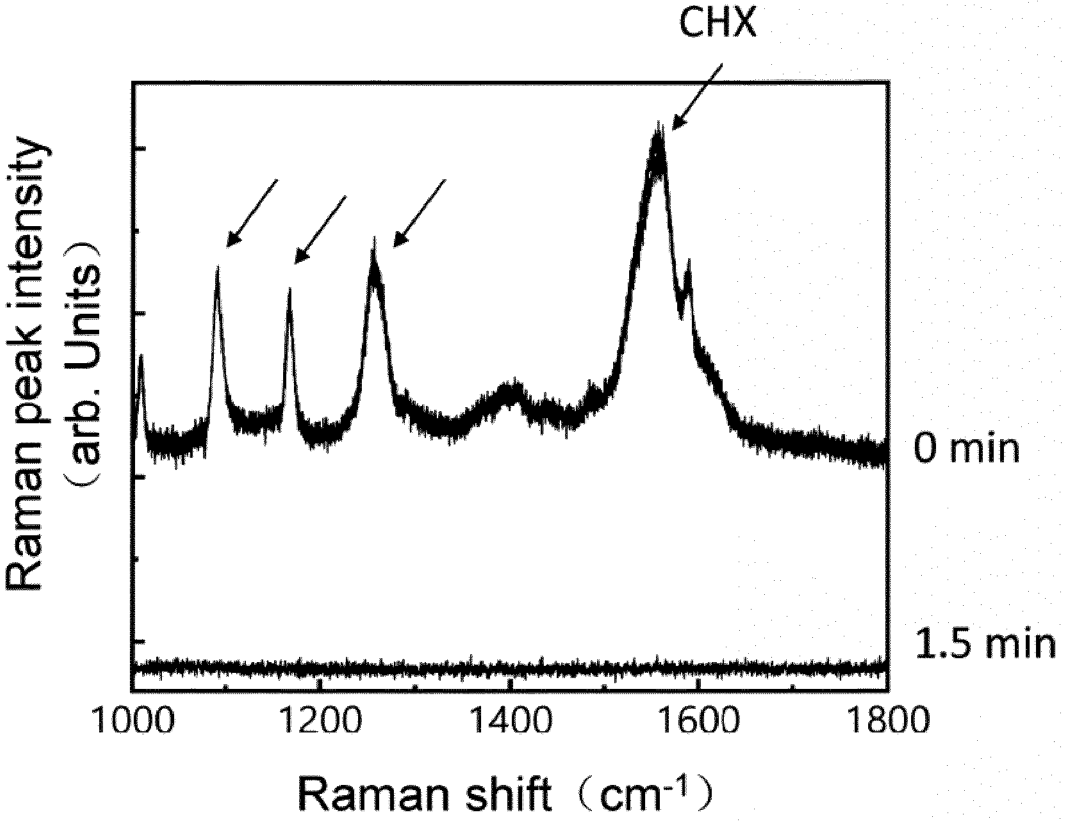
CHX
Raman peak intensity
(arb. Units)
0 min
1.5 min
1000
1200
1400
1600
1800
Raman shift (cm-1)

FIG.20

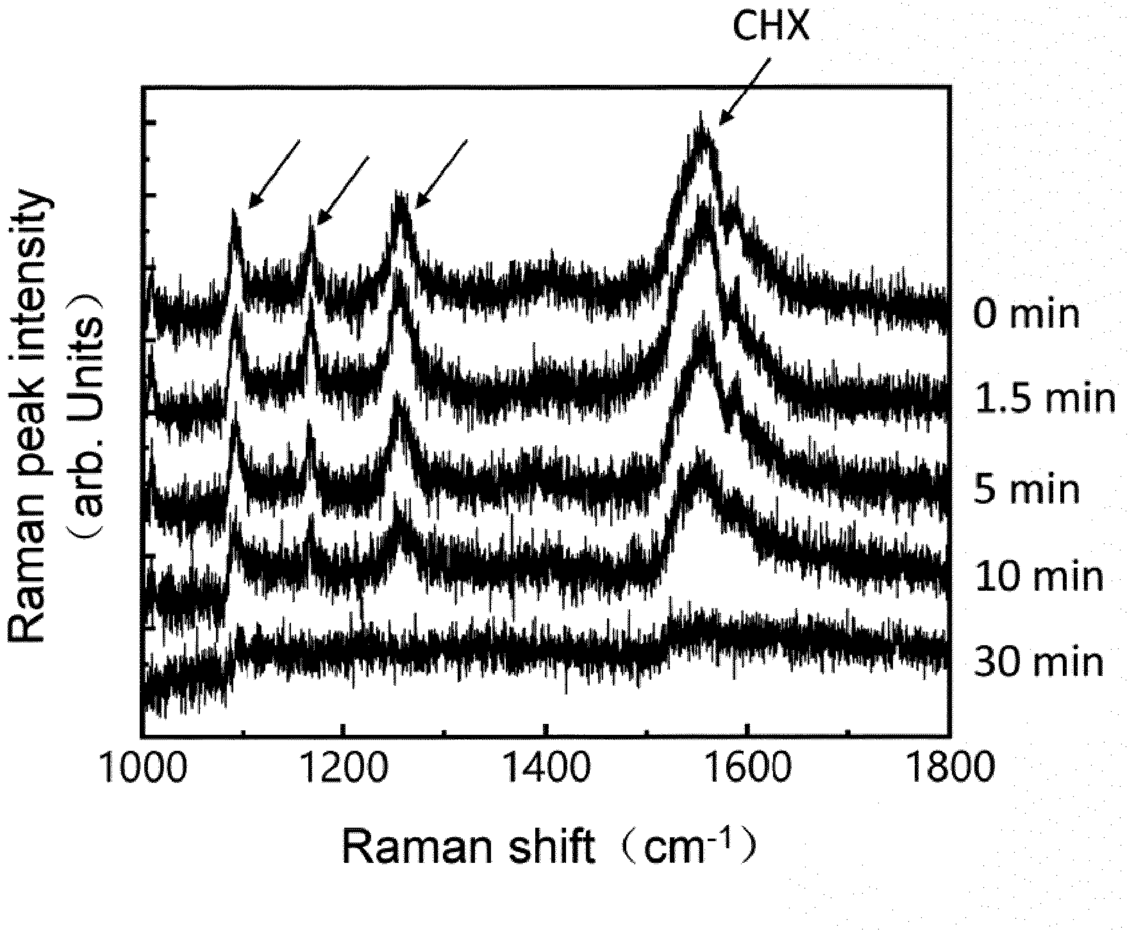
CHX
0 min
1.5 min
5 min
10 min
30 min
Raman peak intensity
（arb. Units）
1000
1200
1400
1600
1800
Raman shift（cm-1）

FIG.21

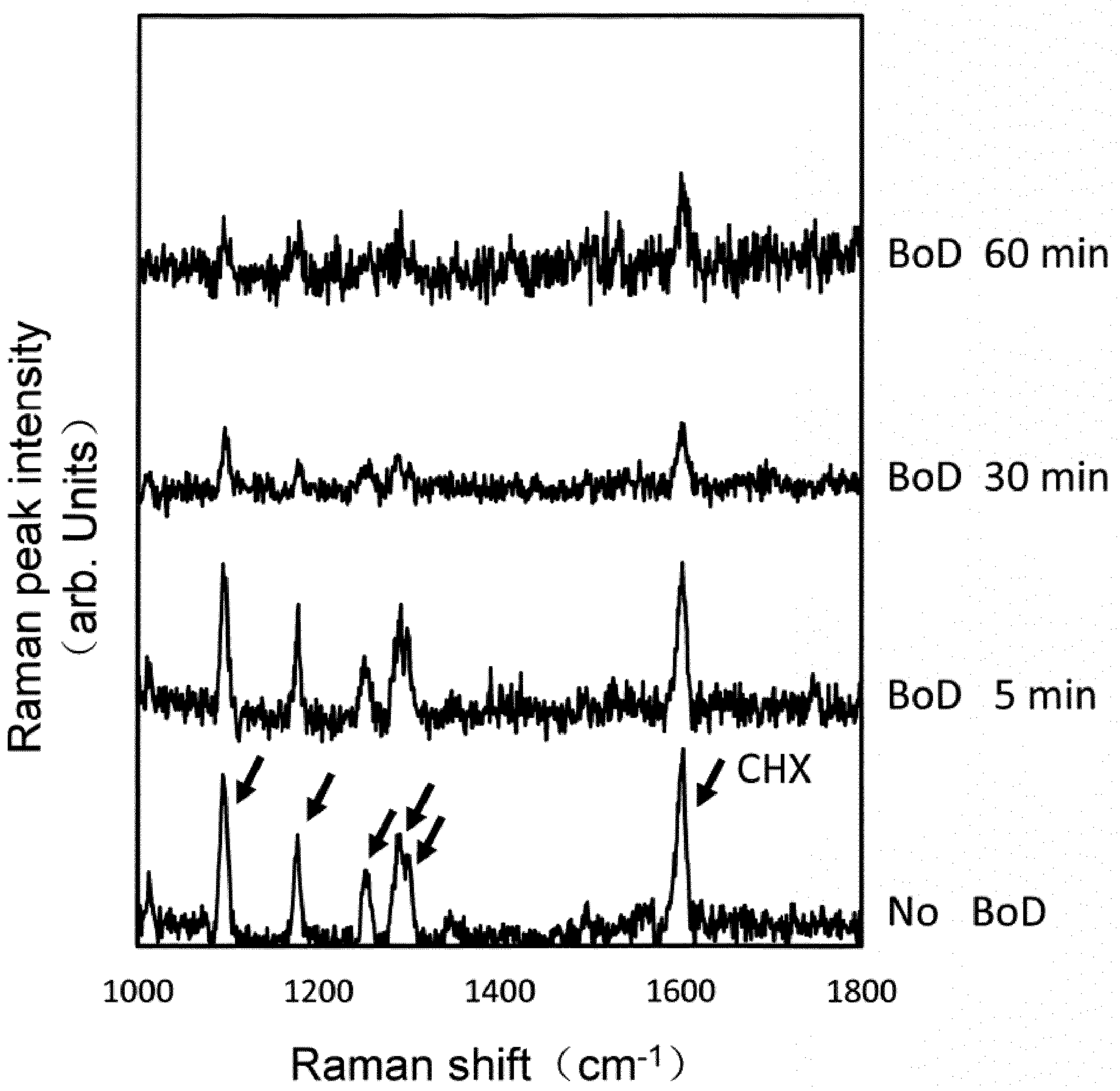
Raman peak intensity
(arb. Units)
BoD 60 min
BoD 30 min
BoD 5 min
CHX
No BoD
1000
1200
1400
1600
1800
Raman shift (cm-1)

**INTERNATIONAL SEARCH REPORT**

International application No.
PCT/JP2021/011458

A. CLASSIFICATION OF SUBJECT MATTER
Int.Cl. C09D5/00(2006.01)i, A61L31/08(2006.01)i, A61L31/12(2006.01)i, A61L31/14(2006.01)i, A61L31/16(2006.01)i, C09D7/61(2018.01)i, C09D7/63(2018.01)i, B32B3/26(2006.01)i, C09D1/00(2006.01)i, A01N25/34(2006.01)i
FI: C09D1/00, C09D7/63, C09D7/61, A61L31/08, A61L31/12, A61L31/14400, A61L31/16, B32B3/26A, C09D5/00Z, A01N25/34A
According to International Patent Classification (IPC) or to both national classification and IPC

B. FIELDS SEARCHED
Minimum documentation searched (classification system followed by classification symbols)
Int.Cl. C09D5/00, A61L31/08, A61L31/12, A61L31/14, A61L31/16, C09D7/61, C09D7/63, B32B3/26, C09D1/00, A01N25/34

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2015/104894 A1 (KURARAY CHEMICAL CO., LTD.) 16 July 2015 (2015-07-16), claims 1-3, 14, paragraphs [0022]-[0029], [0049]-[0057], examples 1-9, 12-14 | 1-4, 7-12 |
| X | JP 2020-40267 A (IBIDEN CO., LTD.) 19 March 2020 (2020-03-19), claims 1, 3-4, 6-7, paragraphs [0020], [0021], [0051], [0052], 75, 79 | 1-4, 6-13 |
| A | JP 2004-81008 A (KANEGAFUCHI CHEM IND CO., LTD.) 18 March 2004 (2004-03-18), paragraph [0005] | 5 |

☐ Further documents are listed in the continuation of Box C.
☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 June 2021 | 15 June 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/011458

| | | |
|---|---|---|
| WO 2015/104894 A1 | 16 July 2015 | (Family: none) |
| JP 2020-40267 A | 19 March 2020 | (Family: none) |
| JP 2004-81008 A | 18 March 2004 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011098976 A
- JP 2012072100 A
- JP 2017210566 A